# EUROPEAN PATENT SPECIFICATION

(11) **EP 0 982 486 B1**
(45) Date of publication and mention of the grant of the patent: **01.10.2008**
(21) Application number: 99116508.5
(22) Date of filing: 23.08.1999
(51) Int. Cl.: F02D 21/08, F02D 41/00

(54) **Internal combustion engine**
Brennkraftmaschine
Moteur à combustion interne

(30) Priority: 25.08.1998 JP 23895998; 26.10.1998 JP 30425498
(43) Date of publication of application: 01.03.2000
(73) Proprietor: Toyota Jidosha Kabushiki Kaisha, Toyota-shi, Aichi-ken, 471-8571 (JP)
(72) Inventor: Yoshizaki, Kouji, c/o Toyota Jidosha Kabushiki K., Toyota-shi, Aichi-ken 471-8571 (JP); Sasaki, Shizuo, c/o Toyota Jidosha Kabushiki K., Toyota-shi, Aichi-ken 471-8571 (JP); Gotoh, Masato, c/o Toyota Jidosha Kabushiki K., Toyota-shi, Aichi-ken 471-8571 (JP); Ito, Takekazu, c/o Toyota Jidosha Kabushiki K., Toyota-shi, Aichi-ken 471-8571 (JP); Murata, Hiroki, c/o Toyota Jidosha Kabushiki K., Toyota-shi, Aichi-ken 471-8571 (JP)
(74) Representative: TBK-Patent

(56) References cited:
- EP-A- 0 803 645
- EP-A- 0 879 946
- US-A- 5 201 173
- US-A- 5 601 068

## Description

### BACKGROUND OF THE INVENTION

### 1. Field of the Invention

The present invention relates to an internal combustion engine according to the preamble of claim 1.

### 2. Description of the Related Art

Conventionally, in an internal combustion engine such as a diesel engine, an engine exhaust passage and an engine intake passage are connected with each other by an exhaust gas recirculation (hereinafter referred to as EGR) passage. Exhaust gas, namely, EGR gas is recirculated into the engine intake passage via the EGR passage. In this case, the EGR gas has a relatively high specific heat and is able to absorb a large amount of heat. Hence, as the amount of EGR gas is increased, that is, as the EGR rate / the amount of EGR gas/the amount of EGR gas + the amount of intake air) is increased, the combustion temperature in a combustion chamber decreases. If the combustion temperature decreases, the generation amount of NOx is reduced. Thus, the larger the EGR rate becomes, the smaller the generation amount of NOx becomes.

As described hitherto, it has been conventionally known that the generation amount of NOx is reduced by increasing the EGR rate. However, in the process of increasing the EGR rate, when the EGR rate exceeds a certain threshold value, the generation amount of soot, namely, smoke starts increasing abruptly. In this respect, it is conventionally considered that if the EGR rate is increased beyond a certain threshold value, the amount of smoke increases endlessly. In other words, the EGR rate at which the amount of smoke starts increasing abruptly is considered to be a maximum allowable value of the EGR rate.

Accordingly, the EGR rate is set below the maximum allowable value. Although the maximum allowable value of the EGR rate differs greatly depending on a type of the engine or fuel, it is approximately 30 to 50%. Therefore, in the diesel engine, the EGR rate is at most set to 30 to 50%.

As described above, it is conventionally considered that the EGR rate has a maximum allowable value. Thus, the EGR rate is set so as to reduce a generation amount of NOx to the maximum possible extent, on condition that the EGR rate does not exceed the maximum allowable value. However, even if the EGR rate has been thus determined, the generation amount of NOx cannot be reduced limitlessly. In fact, the generation of a comparative amount of NOx is inevitable.

However, the following fact has been discovered in the course of studies on combustion in diesel engines. That is, as described above, if the EGR rate is made larger than the maximum allowable value, the generation amount of smoke increases abruptly. However, the generation amount of smoke has its peak. If the EGR rate is further increased after the generation amount of smoke has reached its peak, the generation amount of smoke then starts decreasing abruptly. If the EGR rate is set to 70% or more during an idling operation, or if the EGR rate is set to about 55% or more in the case where EGR gas is cooled intensively, NOx is hardly generated and the generation amount of smoke becomes almost zero. Namely, soot is hardly generated. Thereafter, based on this discovery, further studies have been conducted on the reason why soot is hardly generated. As a result, a novel unprecedented combustion system capable of reducing soot and NOx simultaneously has been constructed. This novel combustion system will be explained later in detail. In short, this combustion system is based on the idea that the growth of hydrocarbon is stopped before it grows up to become soot.

In other words, it has been revealed by repeated experiments and studies that if the temperature of fuel and ambient gas in the combustion chamber during combustion is equal to or lower than a certain temperature, the growth of hydrocarbon is stopped before it becomes soot, and that if the temperature of fuel and ambient gas becomes higher than the aforementioned certain temperature, the hydrocarbon rapidly grows up to become soot. In this case, the temperature of fuel and ambient gas is greatly affected by the endothermic effect of the gas surrounding fuel at the time of fuel combustion. If the endothermic value of the gas surrounding the fuel is adjusted in accordance with an exothermic value during the fuel combustion, the temperature of fuel and ambient gas can be controlled.

Accordingly, if the temperature of fuel and ambient gas in the combustion chamber during combustion is set equal to or lower than a temperature at which the growth of hydrocarbon is stopped halfway, no soot is generated. The temperature of fuel and ambient gas in the combustion chamber during combustion can be set equal to or lower than a temperature at which the growth of hydrocarbon is stopped halfway, by adjusting an endothermic value of the gas surrounding fuel. On the other hand, the hydrocarbon that has stopped growing before becoming soot can be cleaned easily by means of a posttreatment that uses an oxidation catalyst or the like. This is the basic concept of the novel combustion system. The present applicant has already applied for a patent for an internal combustion engine employing the novel combustion system, under the publication number of EP-A-879,946.

### SUMMARY OF THE INVENTION

It is an object of the present invention to further develop an internal combustion engine according to the preamble of claim 1 such that it can ensure good low-temperature combustion even at the time of a change in temperatures including a temperature of gas introduced into the combustion chamber, a temperature of engine coolant and the like.

The above-described object is achieved an by internal combustion engine having the combination of features stated in the main claim. The dependent claims disclose further advantageous implementations of the present invention.

In order to achieve the aforementioned object, according to the present invention, there is provided an internal combustion engine that is provided with an exhaust gas recirculation system for recirculating exhaust gas into an engine intake passage, wherein as an amount of recirculated exhaust gas supplied to the engine intake passage is increased, a generation amount of soot gradually increases and reaches its peak. The amount of recirculated gas supplied to the combustion chamber is controlled to exceed an amount of recirculated exhaust gas corresponding to the peak of the generation amount of soot, wherein a temperature of fuel and ambient gas in the combustion chamber is affected by factors influencing operational conditions. A representative temperature reflecting the influencing factors is detected by a detection means and an exhaust gas recirculation rate is controlled based on the detection amount.

Preferably, an exhaust gas recirculation rate is increased in proportion to an increase in the detected temperature. The representative temperature can be determined based on at least a temperature of intake gas supplied to the combustion chamber such that the intake gas temperature rises in proportion to a rise of the representative temperature.

According to an advantageous further development in addition to the above control of the exhaust gas recirculation rate, with an increase of the required injection amount, an actual injection amount can increase gradually and the exhaust gas recirculation control valve can open gradually, and wherein, with a decrease of the required injection amount, an actual injection amount can reduce gradually and the exhaust gas recirculation control valve can close gradually.

Although this summary does not describe all the features of the present invention, it should be understood that any combination of the features stated in the dependent claims is within the scope of the present invention.

### BRIEF DESCRIPTION OF THE DRAWINGS

The foregoing and further objects, features and advantages of the present invention will become apparent from the following description of preferred embodiments with reference to the accompanying drawings, wherein:
Fig. 1 is a general view of a compression ignition type internal combustion engine;
Fig. 2 is a graph showing changes in opening degree of a throttle valve, EGR rate, and generation amounts of smoke, HC, CO and NOx in conjunction with a change in air-fuel ratio;
Fig. 3 shows a combustion pressure in conjunction with a change in a air fuel ratio;
Fig. 4 shows molecules of fuel;
Fig. 5 shows a relationship between generation amount of smoke and EGR rate;
Fig. 6 shows a relationship between a total amount of intake gas and the required load;
Fig. 7 shows a first operational area I and a second operational area II;
Fig. 8 is a graph showing an opening degree of a throttle valve, an opening degree of an EGR control valve, an air fuel ratio, an injection timing and an injection amount at the required load;
Fig. 9 shows an air-fuel ratio in the first operational area I and the like;
Figs. 10 show an increase amount ΔEG in EGR rate;
Fig. 11 shows changes in opening degree of the throttle valve and the like;
Fig. 12 is a map of target opening degree ST of the throttle valve, target opening degree SE of an EGR control valve and target air-fuel ratio A/F when ΔEG assumes a value of ΔEG0;
Fig. 13 is a map of target opening degree ST of the throttle valve, target opening degree SE of the EGR control valve and target air-fuel ratio A/F when ΔEG assumes a value of ΔEG5;
Fig. 14 is a map of target opening degree ST of the throttle valve, target opening degree SE of the EGR control valve and target air-fuel ratio A/F when ΔEG assumes a value of ΔEG10;
Fig. 15 is a map of target opening degree ST of the throttle valve, target opening degree SE of the EGR control valve and target air-fuel ratio A/F when ΔEG assumes a value of ΔEG15;
Fig. 16 shows air-fuel ratio during a second combustion mode;
Figs. 17 show a map of a target opening degree ST of the throttle valve and of a target opening degree SE of the EGR control valve, respectively;
Fig. 18 is a map of fuel injection amount;
Fig. 19 is a flowchart for controlling operation of the engine;
Fig. 20 is a map of a required injection amount Q in the first operational area I;
Figs. 21 show a map of a target opening degree ST of the throttle valve and of a target opening degree SE of the EGR control valve, respectively;
Figs. 22 show a map of target opening degree ST of the throttle valve and of a target opening degree SE of the EGR control valve, respectively;
Figs. 23 are time charts showing changes in injection amount and target opening degree SE of the EGR control valve; and
Fig. 24 is a flowchart for controlling operation of the engine.

### DESCRIPTION OF THE PREFERRED EMBODIMENTS

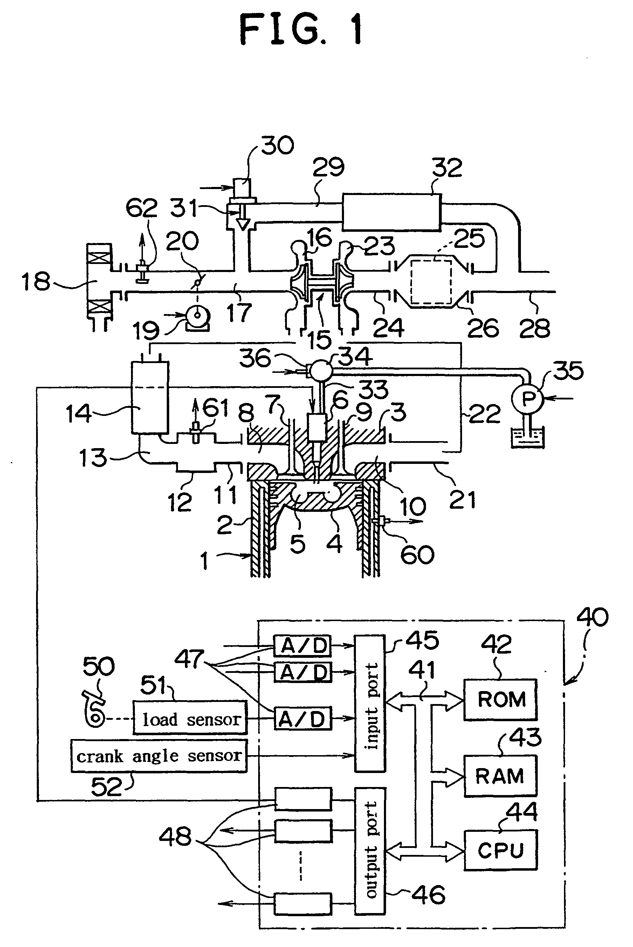

Fig. 1 shows a case where the present invention is applied to a four-stroke compression ignition type internal combustion engine.

An engine body 1 is provided with a cylinder block 2, a cylinder head 3, a piston 4, a combustion chamber 5, an electrically controlled fuel injection valve 6, an intake valve 7, an intake port 8, an exhaust valve 9 and an exhaust port 10. The intake port 8 communicates with a surge tank 12 via a corresponding intake branch pipe 11. The surge tank 12 communicates with an outlet portion of a compressor 16 of a supercharger such as an exhaust turbocharger 15 via an intake duct 13 and an inter cooler 14. An inlet portion of the compressor 16 communicates with an air cleaner 18 via an air suction pipe 17. Disposed in the air suction pipe 17 is a throttle valve 20, which is driven by a step motor 19. The exhaust port 10 communicates with an inlet portion of an exhaust turbine 23 of the exhaust turbocharger 15 via an exhaust manifold 21 and an exhaust pipe 22. An outlet portion of the exhaust turbine 23 communicates with a catalytic converter 26 incorporating a catalyst 25 functioning as an oxidiser.

An exhaust pipe 28 communicating with an outlet portion of the catalytic converter 26 and the air suction pipe 17 downstream of the throttle valve 20 are coupled to each other via an EGR passage 29. Disposed in the EGR passage 29 is an EGR control valve 31, which is driven by a step motor 30. Further, an inter cooler 32 for cooling EGR gas flowing through the EGR passage 29 is disposed in the EGR passage 29. In the embodiment shown in Fig. 1, engine coolant is introduced into the inter cooler 32 so as to cool EGR gas.

Further, the fuel injection valve 6 communicates with a fuel reservoir, i.e., a so-called common rail 34 via a fuel feed pipe 33. Fuel is supplied to the common rail 34 from an electrically controlled fuel pump 35, whose discharge amount is variable. The fuel supplied to the common rail 34 is supplied to the fuel injection valve 6 via each fuel feed pipe 33. Installed in the common rail 34 is a fuel pressure sensor 36 for detecting a fuel pressure in the common rail 34. Based on an output signal from the fuel pressure sensor 36, the discharge amount of the fuel pump 35 is controlled such that the fuel pressure in the common rail 34 becomes a target fuel pressure.

An electronic control unit 40 is composed of a digital computer and provided with a ROM (read only memory) 42, a RAM (random access memory) 43, a CPU (microprocessor) 44, an input port 45 and an output port 46, which are interconnected with one another by a bi-directional bus 41. Disposed in the engine body 1 is a coolant temperature sensor 60 for detecting a temperature of engine coolant. An output signal from the coolant temperature sensor 60 is inputted to the input port 45 via a corresponding AD converter 47. Disposed in the surge tank 12 is a temperature sensor 61 for detecting a temperature of mixture of intake air and EGR gas. An output signal from the temperature sensor 61 is inputted to the input port 45 via a corresponding AD converter 47.

On the other hand, a mass flowmeter 62 for detecting a mass of intake air is disposed in the air suction pipe 17 upstream of the throttle valve 20. An output signal from the mass flowmeter 62 is inputted to the input port 45 via a corresponding AD converter 47. Further, an output signal from the fuel pressure sensor 36 is also inputted to the input port 45 via a corresponding AD converter 47. Connected with an accelerator pedal 50 is a load sensor 51, which generates an output voltage proportional to a depression amount L of the accelerator pedal 50. An output voltage of the load sensor 51 is inputted to the input port 45 via a corresponding AD converter 47. Further, connected to the input port 45 is a crank angle sensor 52, which generates an output pulse every time a crank shaft rotates, for example, by 30°. On the other hand, the output port 46 is connected with the fuel injection valve 6, the step motor 19 for controlling the throttle valve, the step motor 30 for controlling the EGR control valve and the fuel pump 35 via a corresponding driving circuit 48.

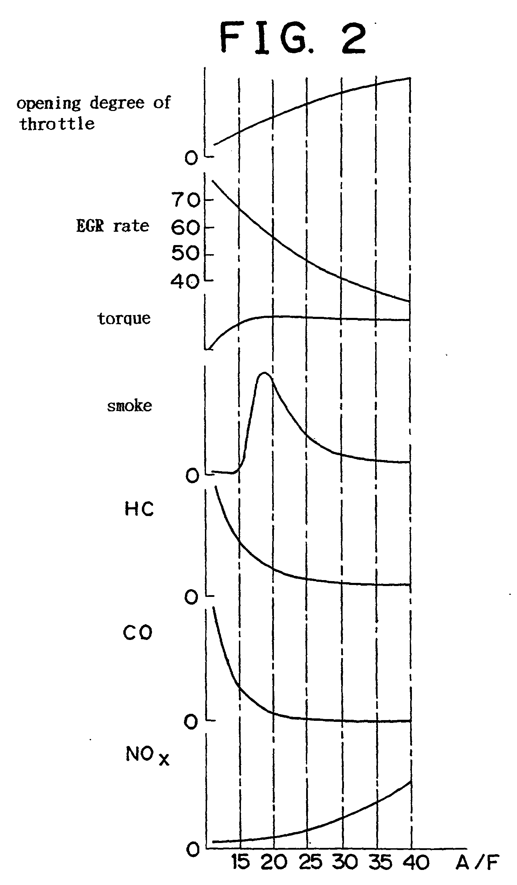

Fig. 2 shows an experimental example indicating changes in output torque and changes in discharge amount of smoke, HC, CO and NOx when the air-fuel ratio A/F (indicated by an axis of abscissa in Fig. 2) is changed by changing an opening degree of the throttle valve 20 and an EGR rate during a low-load operation of the engine. As can be seen from Fig. 2, in this experimental example, the smaller the air-fuel ratio A/F becomes, the larger the EGR rate becomes. When the air-fuel ratio A/F is equal to or smaller than a stoichiometric air-fuel ratio (about 14.6), the EGR rate is equal to or larger than 65%.

As shown in Fig. 2, if the air-fuel ratio A/F is made smaller by increasing the EGR rate, the generation amount of smoke starts increasing when the EGR rate reaches about 40% and the air-fuel ratio A/F reaches about 30. Then, if the air-fuel ratio A/F is made smaller by further increasing the EGR rate, the generation amount of smoke increases abruptly and reaches its peak. Then, if the air-fuel ratio A/F is made smaller by further increasing the EGR rate, the generation amount of smoke drops abruptly. When the EGR rate is equal to or larger than 65% and the air-fuel ratio A/F approaches 15.0, the generation amount of smoke becomes almost zero. That is, soot is hardly generated. At this time, the output torque of the engine drops slightly, and the generation amount of NOx becomes comparatively low. On the other hand, the generation amounts of HC and CO start increasing.

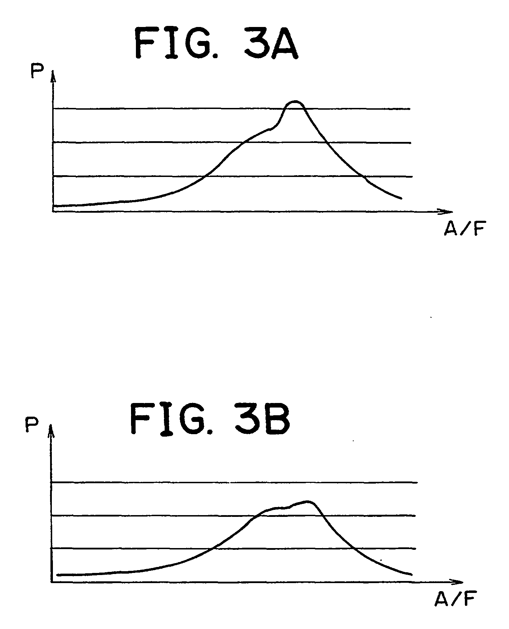

Fig. 3A shows changes in fuel pressure in the combustion chamber 5 when the air-fuel ratio A/F is in the vicinity of 21 and the generation amount of smoke assumes its maximum value. Fig. 3B shows changes in fuel pressure in the combustion chamber 5 when the air-fuel ratio A/F is in the vicinity of 18 and the generation amount of smoke is almost zero. As is apparent from the comparison of Fig. 3A with Fig. 3B, the fuel pressure is lower in the case where the generation amount of smoke is almost zero as shown in Fig. 3B than in the case where the generation amount of smoke is large as shown in Fig. 3A.

The following can be concluded from the experimental results shown in Figs. 2 and 3. That is, first of all, when the air-fuel ratio A/F is equal to or smaller than 15.0 and the generation amount of smoke is almost zero, the generation amount of NOx drops drastically, as can be seen from Fig. 2. The fact that the generation amount of NOx has dropped means that the combustion temperature in the combustion chamber 5 has dropped. Accordingly, when soot is hardly generated, it can be concluded that the combustion temperature in the combustion chamber 5 is low. The same conclusion can also be drawn from Fig. 3. That is, the combustion pressure is low in a state shown in Fig. 3B where soot is hardly generated. Therefore, at this time, it can be concluded that the combustion temperature in the combustion chamber 5 is low.

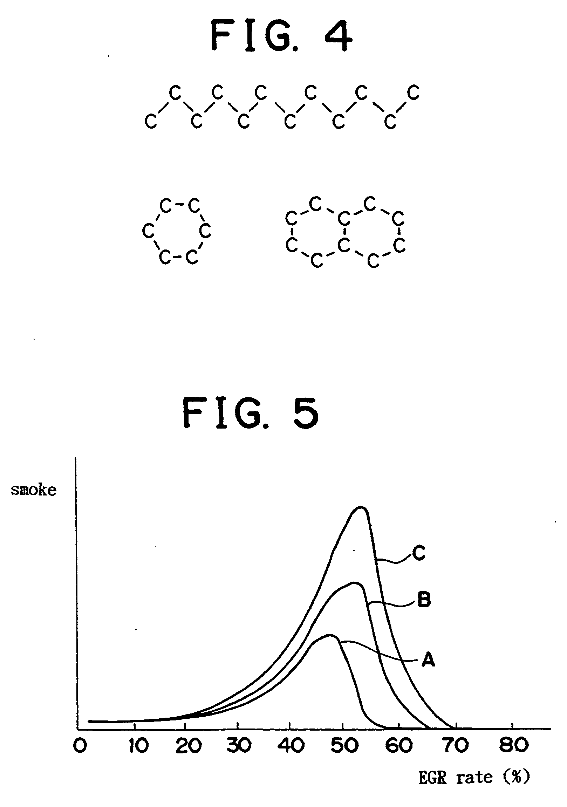

Secondly, as shown in Fig. 2, when the generation amount of smoke, namely, the generation amount of soot becomes almost zero, the discharge amounts of HC and CO increase. This means that hydrocarbon is discharged before growing up to become soot. In other words, the linear hydrocarbon or aromatic hydrocarbon contained in fuel as shown in Fig. 4 is thermally decomposed when heated in a state of oxygen deficiency, and a precursor of soot is formed. Then, soot that is composed of a solid body of assembled carbon atoms is produced. In this case, the actual process in which soot is produced is complicated, and it is unclear what state the precursor of soot assumes. In any case, the hydrocarbon as shown in Fig. 4 grows up to become soot through the precursor of soot. Accordingly, as described above, when the generation amount of soot becomes almost zero, the discharge amounts of HC and CO increase as shown in Fig. 2. At this time, HC is either the precursor of soot or hydrocarbon in a state prior to the precursor of soot.

The above-described studies based on the experimental results shown in Figs. 2 and 3 are summarised as follows. That is, when the combustion temperature in the combustion chamber 5 is low, the generation amount of soot is almost zero. At this time, the precursor of soot or hydrocarbon in a state prior to the precursor of soot is discharged from the combustion chamber 5. As a result of more elaborate experiments and studies on this subject, it has been revealed that the growing process of soot is stopped halfway, that is, no soot is generated in the case where the temperature of fuel and ambient gas in the combustion chamber 5 is equal to or lower than a certain temperature. When the temperature of fuel and ambient gas in the combustion chamber 5 becomes equal to or higher than the certain temperature, soot is generated.

The temperature of fuel and ambient gas when the process of producing hydrocarbon is stopped in a state prior to the precursor of soot, namely, the aforementioned certain temperature changes depending on various factors such as the type of fuel, air-fuel ratio, compression ratio and the like. Accordingly, it is impossible to mention a concrete value of the aforementioned certain temperature. However, the aforementioned certain temperature is closely related to the generation amount of NOx and thus can be limited to a certain range judging from the generation amount of NOx. In other words, the larger the EGR rate becomes, the lower the temperature of fuel and ambient gas during combustion becomes. The larger the EGR rate becomes, the smaller the generation amount of NOx becomes. In this case, when the generation amount of NOx becomes about 10ppm (g/t) or less, soot is hardly generated. Accordingly, the aforementioned certain temperature virtually coincides with a temperature at which the generation amount of NOx becomes about 10ppm (g/t) or less.

Once soot has been produced, the soot cannot be cleaned by means of a posttreatment that uses a catalyst functioning as an oxidiser. On the other hand, the precursor of soot or hydrocarbon in a state prior to the precursor of soot can be cleaned easily by means of a posttreatment that uses a catalyst functioning as an oxidiser. If such a posttreatment that uses the catalyst functioning as an oxidiser is taken into account, there is a great difference between the case where hydrocarbon is discharged from the combustion chamber 5 as the precursor of soot or in a state prior to the precursor of soot and the case where hydrocarbon is discharged from the combustion chamber 5 as soot. The important features of the novel combustion system employed in the present invention are that hydrocarbon is discharged from the combustion chamber 5 as the precursor of soot or in a state prior to the precursor of soot without producing soot in the combustion chamber 5 and that the hydrocarbon is oxidiser by means of the catalyst functioning as an oxidiser.

In order to stop the growth of hydrocarbon in a state prior to the production of soot, it is necessary to keep fuel and ambient gas in the combustion chamber 5 during combustion lower than a temperature at which soot is produced. In this case, it has been revealed that the endothermic effect of ambient gas at the time of fuel combustion has an enormous effect in limiting the temperature of the fuel and ambient gas.

In other words, if there is only air around fuel, the evaporated fuel immediately reacts with oxygen in the air and burns. In this case, the temperature of the air that is away from the fuel does not rise considerably, and only the air surrounding the fuel locally reaches a very high temperature. Namely, at this time, the air that is away from the fuel is hardly subjected to the endothermic effect of the combustion heat of the fuel. In this case, since the combustion temperature locally becomes very high, the unburnt hydrocarbon that has received the combustion heat produces soot.

On the other hand, if there is fuel in the mixture of a large amount of inactive gas and a small amount of air, things are slightly different. In this case, the evaporated fuel is diffused all around, reacts with the oxygen intermingled in the inactive gas, and burns. In this case, since the inactive gas in the periphery absorbs combustion heat, the combustion temperature does not rise considerably. That is, the combustion temperature can be limited to a low temperature. Namely, the presence of inactive gas plays an important role in limiting the combustion temperature, and the endothermic effect of the inactive gas makes it possible to keep the combustion temperature low.

In this case, in order to keep fuel and ambient gas lower than a temperature at which soot is produced, a sufficient amount of inactive gas that can absorb heat of an amount sufficient to achieve such a purpose is required. Accordingly, if the amount of fuel increases, the required amount of inactive gas increases correspondingly. In this case, the larger the specific heat of inactive gas becomes, the larger the endothermic effect thereof becomes. Hence, it is preferable that the specific heat of the inactive gas be large. From this standpoint, since CO₂ or EGR gas has a relatively large specific heat, it is preferable to use EGR gas as inactive gas.

Fig. 5 shows a relationship between EGR rate and smoke in the case where EGR gas is used as inactive gas and the cooling degree of the EGR gas is changed. That is, referring to Fig. 5, a curve A represents a case where EGR gas is maintained at about 90°C by cooling the EGR gas intensively, a curve B represents a case where EGR gas is cooled by a compact cooling system, and a curve C represents a case where EGR gas is not cooled forcibly.

As indicated by the curve A in Fig. 5, in the case where EGR gas is cooled intensively, the generation amount of soot reaches its peak when the EGR rate is slightly lower than 50%. In this case, if the EGR rate is set to about 55% or more, soot is hardly generated.

On the other hand, as indicated by the curve B shown in Fig. 5, in the case where EGR gas is slightly cooled, the generation amount of soot reaches its peak when the EGR rate is slightly higher than 50%. In this case, if the EGR rate is set to about 65% or more, soot is hardly generated.

Further, as indicated by the curve C in Fig. 5, in the case where EGR gas is not cooled forcibly, the generation amount of soot reaches its peak when the EGR rate is in the vicinity of 55%. In this case, if the EGR rate is set to about 70% or more, soot is hardly generated.

Fig. 5 shows a generation amount of smoke when the engine load is relatively high. As the engine load becomes lower, the EGR rate corresponding to a peak generation amount of soot decreases slightly. At this time, the lower limit value of the EGR rate where soot is hardly generated also decreases slightly. Thus, the lower limit value of the EGR rate where soot is hardly generated changes depending on a cooling degree of EGR gas or an engine load.

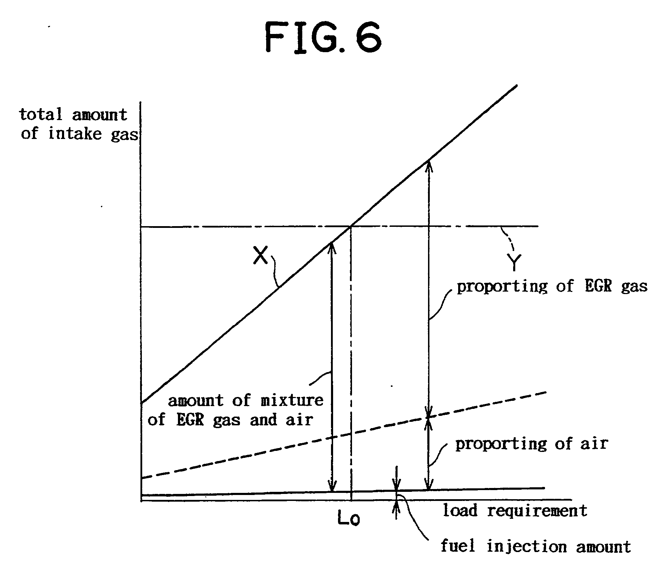

Fig. 6 shows an amount of the mixture of EGR gas and air and a proportion of air to EGR gas in the mixture that are necessary to keep fuel and ambient gas during combustion lower than a temperature at which soot is generated, in the case where EGR gas is used as inactive gas. In Fig. 6, the axis of ordinate represents a total amount of intake gas admitted into the combustion chamber 5, and an alternate long and short dash line Y represents a total amount of intake gas that can be admitted into the combustion chamber 5 when the supercharging operation is not performed. Further, the axis of abscissa represents a load requirement.

Referring to Fig. 6, the proportion of air, namely, the amount of air in the mixture represents an amount of air that is necessary for complete combustion of injected fuel. That is, in the case shown in Fig. 6, the ratio of the amount of air to the amount of injected fuel is equal to the stoichiometric air-fuel ratio. On the other hand, in Fig. 6, the proportion of EGR gas, namely, the amount of EGR gas in the mixture represents a minimum amount of EGR gas that is necessary to keep fuel and ambient gas lower than a temperature at which soot is formed. The aforementioned amount of EGR gas corresponds to an EGR rate of about 55% or more. In the embodiment shown in Fig. 6, the EGR rate is equal to or higher than 70%. Namely, in the case where the total amount of intake gas admitted into the combustion chamber 5 is represented by a solid line X in Fig. 6 and the ratio of the amount of air to the amount of EGR gas is set as shown in Fig. 6, the temperature of fuel and ambient gas becomes lower than a temperature at which soot is produced, and no soot is generated. At this time, the generation amount of NOx is about 10ppm (g/t) or less. Accordingly, the generation amount of NOx is very small.

If the amount of fuel injection increases, the exothermic value at the time of fuel combustion increases. Hence, in order to keep fuel and ambient gas lower than a temperature at which soot is generated, it is necessary to increase an amount of heat to be absorbed by EGR gas. Therefore, as shown in Fig. 6, the amount of EGR gas needs to be increased as the amount of fuel injection increases. In other words, it is necessary to increase an amount of EGR gas as the load requirement becomes higher.

In the case where a supercharging operation is not performed, the total amount X of intake gas admitted into the combustion chamber 5 has an upper limit of Y. Accordingly, in an area in Fig. 6 where the load requirement is larger than L₀, unless the proportion of EGR gas is reduced in accordance with an increase in load requirement, the air-fuel ratio cannot be maintained at the stoichiometric air-fuel ratio. In other words, in the case where the supercharging operation is not performed, if an attempt is made to maintain the air-fuel ratio at the stoichiometric air-fuel ratio in the area where the load requirement is larger than L₀, the EGR rate drops in proportion to an increase in load requirement. That is, in the area where the load requirement is larger than L₀, the temperature of fuel and ambient gas cannot be kept lower than a temperature at which soot is generated.

However, as shown in Fig. 1, if EGR gas is recirculated to an inlet side of the supercharger, namely, to the air suction pipe 17 of the exhaust turbocharger 15 via the EGR passage 29, in the area where the load requirement is larger than L₀, the EGR rate can be maintained at 55% or more, for example, at 70%. Besides, the temperature of fuel and ambient gas can be kept lower than a temperature at which soot is generated. That is, if EGR gas is recirculated so as to set the EGR rate in the air suction pipe 17 to, for example, 70%, the EGR rate of the intake gas that has been pressurised by the compressor 16 of the exhaust turbocharger 15 also becomes 70%. Until the pressurisation by the compressor 16 reaches its limit, the temperature of fuel and ambient gas can be kept lower than a temperature at which soot is generated. Accordingly, it is possible to enlarge an operational area of the engine where low-temperature combustion can be realised.

In this case, the lower the temperature of EGR gas becomes, the more broadly the operational area for realising the low-temperature combustion is enlarged. In this embodiment, as shown in Fig. 1, exhaust gas that has flown out of the exhaust turbine 23 and is relatively low in temperature is recirculated as EGR gas and cooled by the inter cooler 32.

If the EGR rate is set to 55% or more in the area where the load requirement is larger than L₀, the EGR control valve 31 is opened completely and the throttle valve 20 is closed slightly.

As described previously, Fig. 6 shows a case where fuel burns under the stoichiometric air-fuel ratio. However, even if the amount of air is made smaller than that shown in Fig. 6, that is, even if the air-fuel ratio is made rich, it is possible to limit the generation amount of NOx to about 10ppm (g/t) or less while preventing generation of soot. Further, even if the amount of air is made larger than that shown in Fig. 6, that is, even if the average of the air-fuel ratio is set to a lean value of 17 to 18, it is possible to limit the generation amount of NOx to about 10ppm (g/t) or less while preventing generation of soot.

In other words, when the air-fuel ratio is made rich, the amount of fuel becomes excessive. However, since the combustion temperature is set low, a surplus of fuel does not grow up to become soot. Thus, no soot is generated. Further, at this time, the generation amount of NOx is very small. On the other hand, even when the average air-fuel ratio is lean or the air-fuel ratio is equal to the stoichiometric air-fuel ratio, if the combustion temperature becomes high, a small amount of soot is produced. However, according to the present invention, since the combustion temperature is set low, no soot is produced. Furthermore, the generation amount of NOx is also very small.

Thus, while the low-temperature combustion is performed, no soot is generated and the generation amount of NOx is very small regardless of the air-fuel ratio, that is, regardless of whether the air-fuel ratio is rich, equal to the stoichiometric air-fuel ratio, or lean on average. Accordingly, from the standpoint of an enhancement in fuel consumption, it is preferable at this time to set the average air-fuel ratio lean.

Fuel and ambient gas in the combustion chamber 5 during combustion can be kept equal to or lower than a temperature at which the growth of hydrocarbon is stopped halfway, only when the engine load is relatively low, that is, when the exothermic value of combustion is small. Therefore, according to the embodiment of the present invention, when the engine load is low or intermediate, fuel and ambient gas during combustion is kept lower than a temperature at which the growth of hydrocarbon is stopped halfway, and a first combustion mode, namely, low-temperature combustion is performed. When the engine load is high, a second combustion mode, namely, a conventionally adopted combustion is performed. As is apparent from the foregoing description, when the first combustion mode, namely, the low-temperature combustion is performed, the amount of inactive gas in the combustion chamber is larger than the amount of inactive gas corresponding to a peak generation amount of soot, so that soot is hardly generated. When the second combustion mode, namely, the conventionally adopted combustion is performed, the amount of inactive gas in the combustion chamber is smaller than the amount of inactive gas corresponding to the peak generation amount of soot.

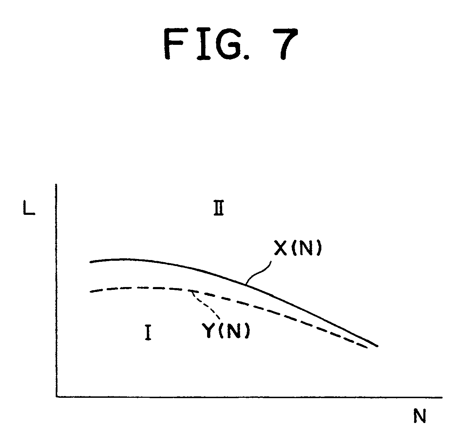

Fig. 7 shows a first operational area I corresponding to a first combustion mode where low-temperature combustion is performed and a second operational area II corresponding to a second combustion mode where the conventionally adopted combustion is performed. Referring to Fig. 7, the axis of ordinate L represents depression amount of the accelerator pedal 50, namely, a load requirement, and the axis of abscissa N represents engine speed. Further, X(N) represents a first border between the first operational area I and the second operational area II, and Y(N) represents a second border between the first operational area I and the second operational area II. Based on the first border X(N), it is determined whether or not a transition from the first operational area I to the second operational area II has been made. Based on the second border Y(N), it is determined whether or not a transition from the second operational area II to the first operational area I has been made.

That is, when the engine is in the first operational area I and low-temperature combustion is performed, if the load requirement L exceeds the first border X(N) which is a function of engine speed N, it is determined that a transition to the second operational area II has been made. Therefore, the conventionally adopted combustion is performed. Then, if the load requirement L becomes lower than the second border Y(N) which is a function of engine speed N, it is determined that a transition to the first operational area I has been made. Therefore, the low-temperature combustion is performed again.

The first reason why the first border X(N) and the second border Y(N) have been thus provided is that the combustion temperature is relatively high on the high-load side in the second operational area II and that the low-temperature combustion cannot be performed immediately even if the load requirement L has become lower than the first border X(N). In other words, unless the load requirement L has become comparatively low and dropped below the second border Y(N), the low-temperature combustion cannot be started immediately. The second reason is that a hysteresis is to be set to eliminate fluctuations between the first operational area I and the second operational area II.

When the engine is in the first operational area I and the low-temperature combustion is performed, soot is hardly generated. Instead, unburnt hydrocarbon is discharged from the combustion chamber 5 in the form of a precursor of soot or in a state prior to the precursor of soot. At this time, the unburnt hydrocarbon that has been discharged from the combustion chamber 5 is suitably oxidised by the catalyst 25 functioning as an oxidiser.

It is to be noted herein that an oxidation catalyst, a three-way catalyst or an NOx absorber can be employed as the catalyst 25. The NOx absorber has functions of absorbing NOx when the average air-fuel ratio in the combustion chamber 5 is lean and discharging the NOx when the average air-fuel ratio in the combustion chamber 5 becomes rich.

The NOx absorber has a carrier, for example, of alumina. Carried on this carrier are an alkaline metal such as potassium (K), sodium (Na), lithium (Li) and cesium (Cs), an alkaline earth metal such as barium (Ba) and calcium (Ca), at least one material selected from rare earth metals such as lanthanum (La) and yttrium (Y), and a noble metal such as platinum (Pt).

Not to mention the oxidation catalyst, the three-way catalyst and the NOx absorber also function as an oxidiser. Accordingly, as described above, the three-way catalyst and the NOx absorber can be employed as the catalyst 25.

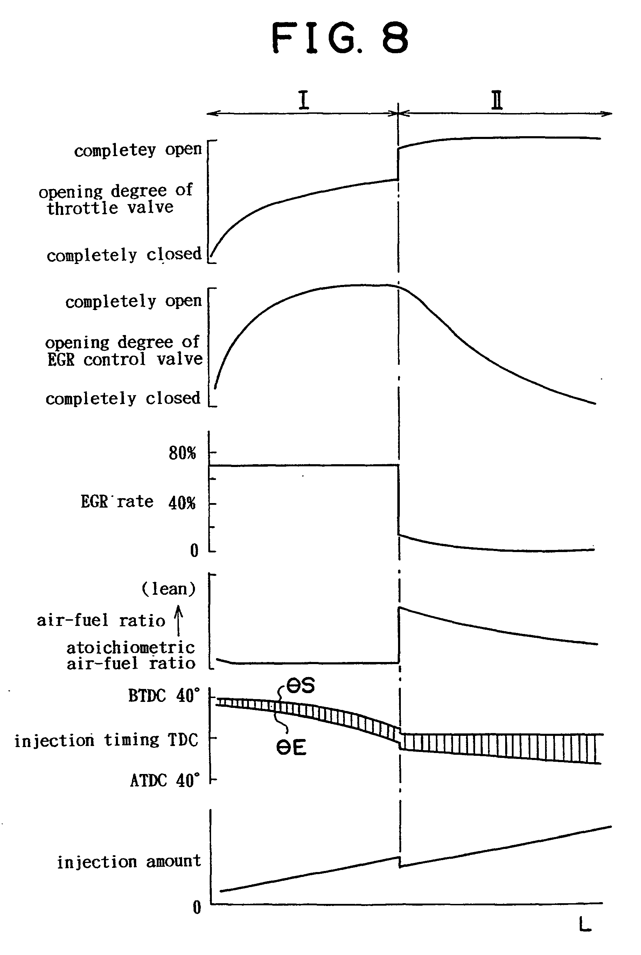

The outline of the operational control performed in the first operational area I and the second operational area II will now be explained with reference to Fig. 8.

Fig. 8 shows changes in opening degree of the throttle valve 20, opening degree of the EGR control valve 31, EGR rate, air-fuel ratio, injection timing and injection amount in conjunction with changes in load requirement L. As shown in Fig. 8, in the first operational area I where the load requirement L is low, as the load requirement L becomes higher, the opening degree of the throttle valve 20 gradually increases approximately from a completely closed state to a 2/3-open state. Further, as the load requirement L becomes higher, the opening degree of the EGR control valve 31 gradually increases approximately from a completely closed state to a completely open state. Further, according to an example shown in Fig. 8, the EGR rate is about 70% in the first operational area I, and the air-fuel ratio is set to about a stoiciometric air fuel ratio.

In other words, the opening degrees of the throttle valve 20 and the EGR control valve 31 are controlled such that the EGR rate is about 70% and the air-fuel ratio is slightly lean in the first operational area I. Further, in the first operational area I, fuel injection is carried out before the compression top dead centre TDC. In this case, an injection start timing θS is retarded as the load requirement L becomes higher. Besides, an injection end timing θE is also retarded as the injection start timing θS is retarded.

During idling operation, the throttle valve 20 is adjusted to be closed almost completely, and the EGR control valve 31 is also adjusted to be closed almost completely. If the throttle valve 20 is adjusted to be closed almost completely, the pressure in the combustion chamber 5 at the beginning of compression becomes low. Hence, the compressive pressure becomes small. If the compressive pressure becomes small, the compressive work by means of the piston 4 becomes small, so that the vibration of the engine body 1 is reduced. In other words, during idling operation, in order to curb vibration of the engine body 1, the throttle valve 20 is adjusted to be closed almost completely.

On the other hand, if the engine undergoes a transition from the first operational area I to the second operational area II, the opening degree of the throttle valve 20 increases stepwise from a 2/3-open state toward a completely open state. At this time, according to the example shown in Fig. 8, the EGR rate decreases stepwise from about 70% to 40% or less, and the air-fuel ratio increases stepwise. That is, since the EGR rate goes beyond a range (Fig. 5) where a large amount of smoke is generated, there is no possibility of a large amount of smoke being generated when the engine undergoes a transition from the first operational area I to the second operational area II.

In the second operational area II, the conventionally adopted combustion is performed. During the conventionally adopted combustion, although a small amount of soot and NOx are generated, the thermal efficiency is higher in comparison with the low-temperature combustion. Accordingly, if the engine undergoes a transition from the first operational area I to the second operational area II, the injection amount is reduced stepwise. In the second operational area II, apart from a few exceptional cases, the throttle valve 20 is held in a completely open state, and the opening degree of the EGR control valve 31 is gradually reduced as the load requirement L becomes higher. In the second operational area II, the EGR rate becomes lower as the load requirement L becomes higher, and the air-fuel ratio becomes smaller as the load requirement L becomes higher. However, the air-fuel ratio remains lean even if the load requirement L has become high. Further, in the second operational area II, the injection start timing θS is in the vicinity of the compressive top dead centre TDC.

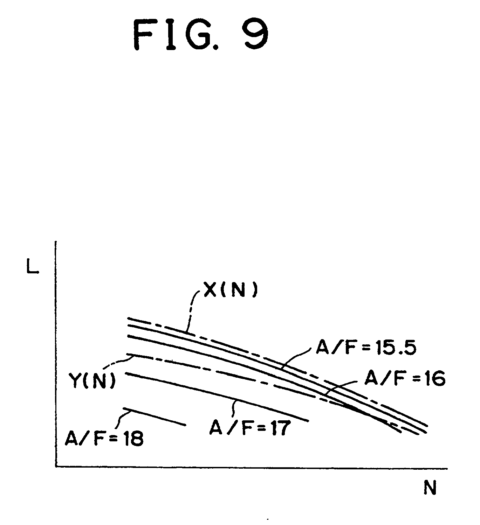

Fig. 9 shows a target air-fuel ratio A/F in the first operational area I. Referring to Fig. 9, curves indicated by A/F = 15.5, A/F = 16, A/F = 17 and A/F = 18 represent the cases where the air-fuel ratio is 15.5, 16, 17 and 18 respectively. The air-fuel ratios between the respective curves are determined by means of proportional distribution. As can be seen from Fig. 9, in the first operational area I, the air-fuel ratio is lean. As the load requirement L becomes lower, the air-fuel ratio A/F is shifted toward the lean side.

In other words, as the load requirement L becomes lower, the exothermic value by means of combustion decreases. Accordingly, as the load requirement L becomes lower, the low-temperature combustion can be performed more easily even if the EGR rate has been reduced. If the EGR rate is reduced, the air-fuel ratio becomes larger. Therefore, as shown in Fig. 9, as the load requirement L becomes lower, the air-fuel ratio A/F is made larger. The larger the air-fuel ratio A/F becomes, the more the fuel consumption is improved. Thus, in order to set the air-fuel ratio toward the lean side to the maximum possible extent, according to this embodiment, the air-fuel ratio A/F is made larger as the load requirement L becomes lower.

As described above, according to the embodiment of the present invention, while the first combustion mode is present, the EGR rate is set to about 70%. However, for example, if the intake gas supplied to the combustion chamber 5 rises in temperature, fuel and ambient gas in the combustion chamber 5 also rise in temperature during combustion thereof. Therefore, at this time, in order to keep fuel and ambient gas in the combustion chamber 5 during combustion equal to or lower than a temperature at which the growth of hydrocarbon is stopped halfway, namely, in order to prevent generation of soot, it is necessary to increase an amount of heat to be absorbed by fuel ambient gas in proportion to a rise in temperature of intake gas.

The same applies to a rise in temperature of engine coolant. That is, if the engine coolant rises in temperature, the amount of heat discharged through the inner wall surface of a cylinder bore during a compression stroke decreases. Hence, fuel and ambient gas in the combustion chamber 5 rises in temperature during combustion. Therefore, at this time, in order to keep fuel and ambient gas in the combustion chamber 5 during combustion equal to or lower than a temperature at which the growth of hydrocarbon is stopped halfway, namely, in order to prevent generation of soot, it is necessary to increase an amount of heat to be absorbed by fuel ambient gas in proportion to a rise in temperature of engine coolant.

In other words, it is necessary to adjust an amount of heat to be absorbed by fuel ambient gas in accordance with a representative temperature that affects the temperature of fuel and ambient gas in the combustion chamber 5 during combustion. If the representative temperature rises, fuel and ambient gas also rise in temperature. Namely, it is necessary to increase an amount of heat to be absorbed by fuel ambient gas in proportion to a rise in representative temperature.

Therefore, according to the embodiment of the present invention, upon a rise in representative temperature, the EGR rate is increased with a view to increasing an amount of heat to be absorbed by fuel ambient gas. Next, this will be explained concretely.

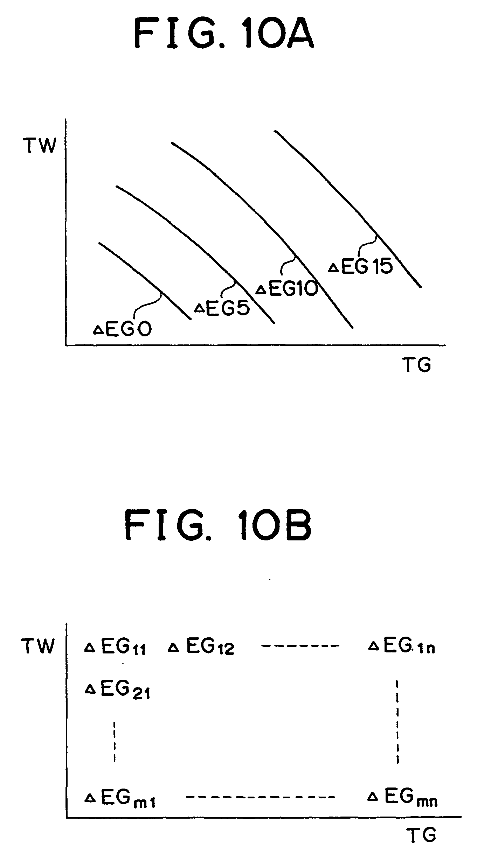

Fig. 10A shows cases where an increase amount ΔEG in EGR rate with respect to a reference EGR rate is zero (ΔEG0), that is, the EGR rate is equal to the reference EGR rate, where an increase amount ΔEG in EGR rate with respect to the reference EGR rate is 5% (ΔEG5), where an increase amount ΔEG in EGR rate with respect to the reference EGR rate is 10% (ΔEG10), and an increase amount ΔEG in EGR rate with respect to the reference EGR rate is 15% (ΔEG15). For example, provided that the reference EGR rate is 70%, the curve ΔEG0 indicates that the EGR rate is 70%, the curve ΔEG5 indicates that the EGR rate is 75%, the curve ΔEG10 indicates that the EGR rate is 80%, and the curve ΔEG15 indicates that the EGR rate is 85%.

Referring to Fig. 10A, the axis of abscissa TG represents temperature of intake gas supplied to the combustion chamber 5, and the axis of ordinate TW represents temperature of engine coolant. Accordingly, it is understood that as the intake gas temperature TG rises, the target EGR rate becomes higher, and that as the engine coolant temperature TW rises, the target EGR rate becomes higher. The increase amount ΔEG in EGR rate is preliminarily stored in the ROM 42 as a function of intake gas temperature TG and engine coolant temperature TW.

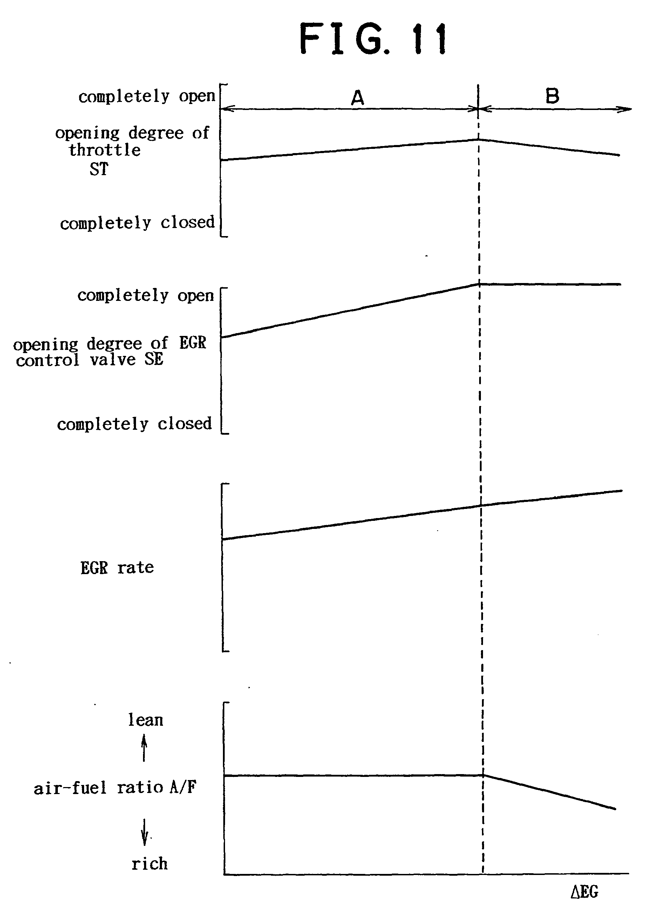

Next, as regards the case where the increase amount ΔEG in EGR rate has become large under a certain load requirement and a certain engine speed, it will be schematically described with reference to Fig. 11 how the opening degree ST of the throttle valve 20 changes, how the opening degree SE of the EGR control valve 31 changes, how the EGR rate changes, and how the air-fuel ratio A/F changes. As shown in Fig. 11, when the increase amount ΔEG in EGR rate is relatively small, that is, when the value of ΔEG becomes larger with the air-fuel ratio A/F being kept constant in an area A, the EGR rate is increased correspondingly. At this time, the opening degree ST of the throttle valve 20 and the opening degree SE of the EGR control valve 31 are controlled such that the EGR rate and the air-fuel ratio A/F shown in Fig. 11 can be achieved. In order to increase the EGR rate while keeping the air-fuel ratio A/F constant, the opening degree SE of the EGR control valve 31 and the opening degree ST of the throttle valve 20 need to be increased. Therefore, the opening degree SE of the EGR control valve 31 and the opening degree ST of the throttle valve 20 change as shown in Fig. 11 in proportion to an increase in ΔEG.

On the other hand, in an area B shown in Fig. 11, the value of ΔEG is large, and the EGR control valve 31 is completely open. If the EGR control valve 31 is open completely, unless the opening degree ST of the throttle valve 20 is made smaller, the EGR rate does not increase. Hence, in the area B, the EGR control valve 31 is kept completely open, and the throttle valve 20 is gradually closed in proportion to an increase in ΔEG. Thereby, also in the area B, the EGR rate is increased in proportion to an increase in ΔEG.

On the other hand, if the throttle valve 20 is closed gradually, the amount of intake air decreases, so that the air-fuel ratio A/F shown in Fig. 11 decreases gradually. If the air-fuel ratio A/F decreases in this manner, the amount of oxygen around fuel also decreases, so that a tranquil state of combustion is achieved. That is, in the area B, due to the operations of increasing an EGR rate and decreasing an air-fuel ratio, fuel and ambient gas during combustion are kept lower than a temperature at which no soot is generated.

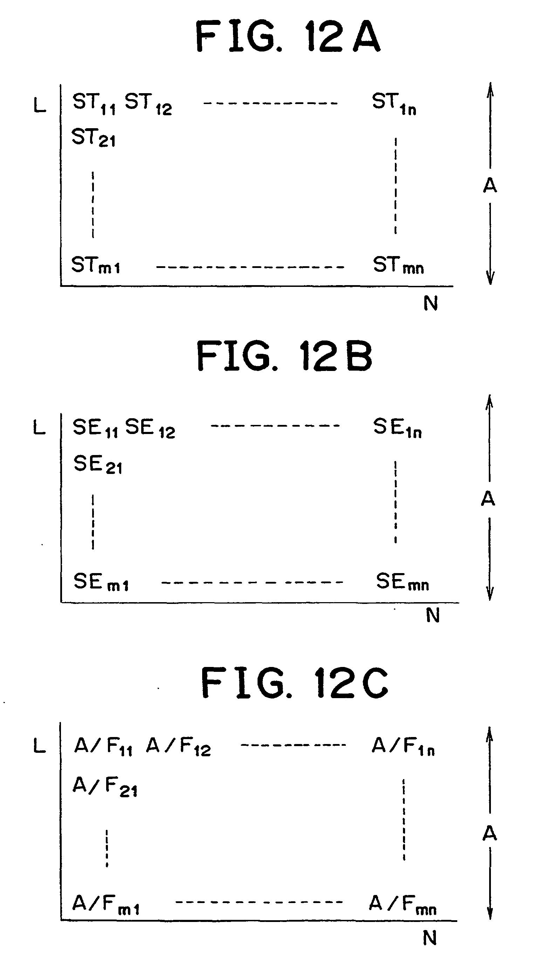

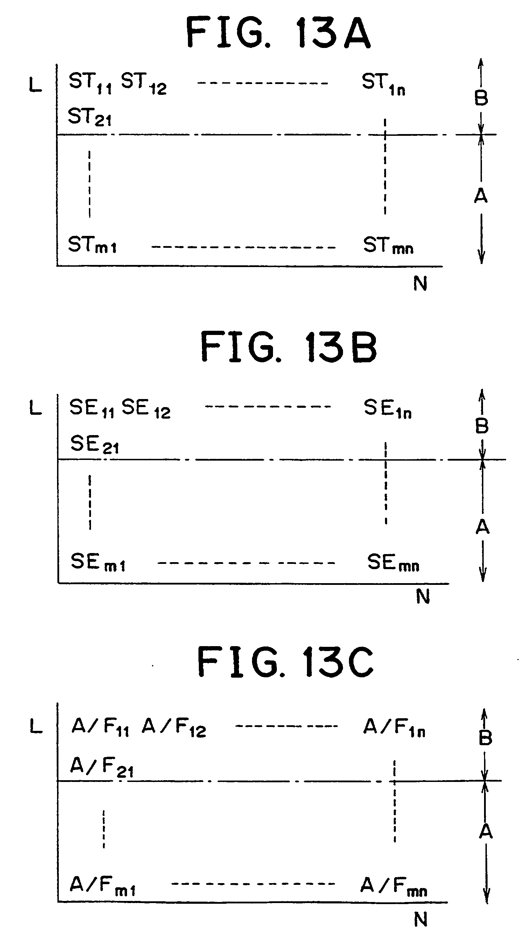

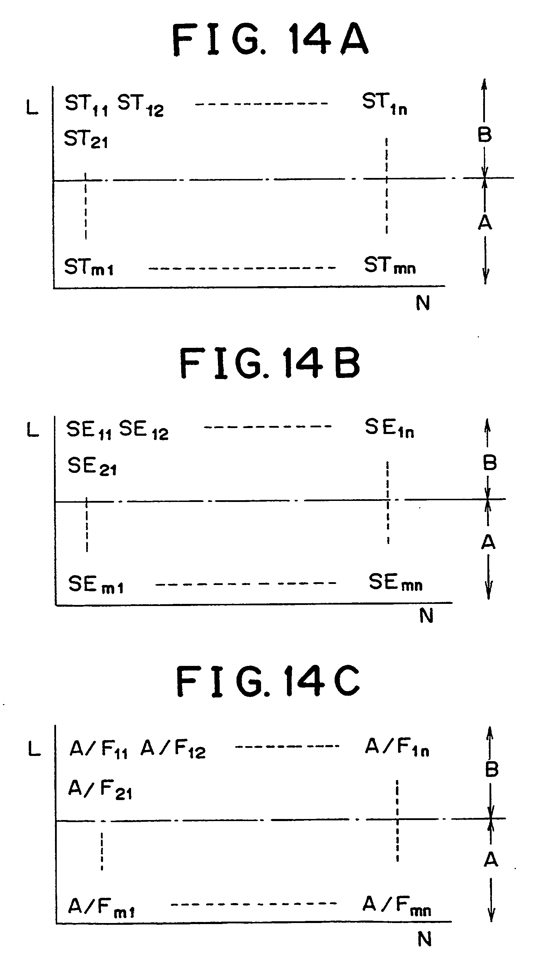

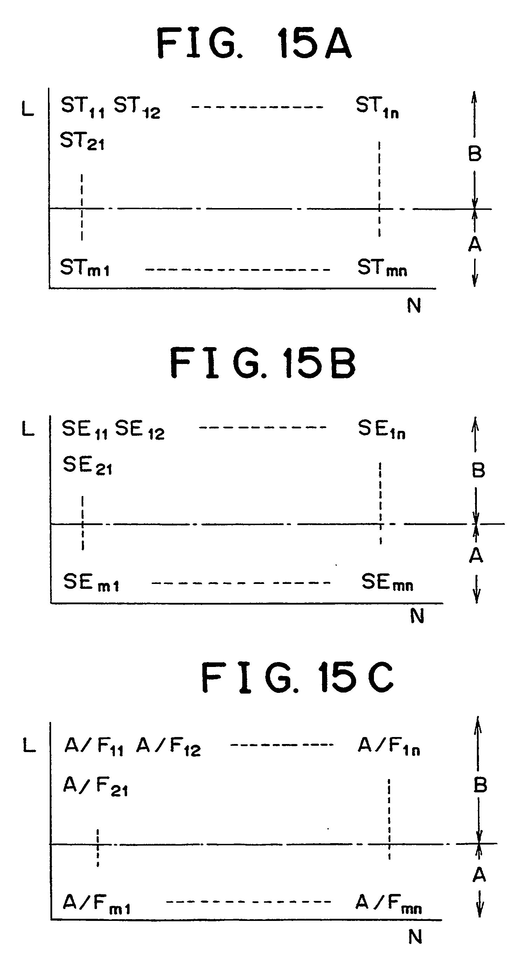

Fig. 12 shows a map (Fig. 12A) of target opening degree ST of the throttle valve 20, a map (Fig. 12B) of target opening degree SE of the EGR control valve 31, and a map (Fig. 12C) of target air-fuel ratio A/F, when the increase amount in EGR rate is ΔEG0. Fig. 13 shows a map (Fig. 13A) of target opening degree ST of the throttle valve 20, a map (Fig. 13B) of target opening degree SE of the EGR control valve 31, and a map (Fig. 13C) of target air-fuel ratio A/F, when the increase amount in EGR rate is ΔEG5 Fig. 14 shows a map (Fig. 14A) of target opening degree ST of the throttle valve 20, a map (Fig. 14B) of target opening degree SE of the EGR control valve 31, and a map (Fig. 14C) of target air-fuel ratio A/F, when the increase amount in EGR rate is ΔEG10. Fig. 15 shows a map (Fig. 15A) of target opening degree ST of the throttle valve 20, a map (Fig. 15B) of target opening degree SE of the EGR control valve 31, and a map (Fig. 15C) of target air-fuel ratio A/F, when the increase amount in EGR rate is ΔEG15.

Each of the maps shown in Figs. 12 through 15 is a function of load requirement L and engine speed N. These maps are preliminarily stored in the ROM 42. The intermediate value between ΔEG0 and ΔEG5, the intermediate value between ΔEG5 and ΔEG10, and the intermediate value between ΔEG10 and ΔEG15 are calculated through interpolation.

Figs. 12 through 15 show the area A in which the air-fuel ratio A/F is kept constant and the area B in which the air-fuel ratio A/F is made smaller in comparison with the area A. As can be seen from Figs. 13, 14 and 15, the area B only exists where the load requirement L is high and a large amount of EGR gas is required. The area B is enlarged toward the low-load side as the value of ΔEG is enhanced. When the value of ΔEG shown in Fig. 12 is ΔEG0, that is, when the EGR rate is equal to the reference EGR rate, only the area A exists. At this time, the target air-fuel ratio A/F shown in Fig. 9 is obtained.

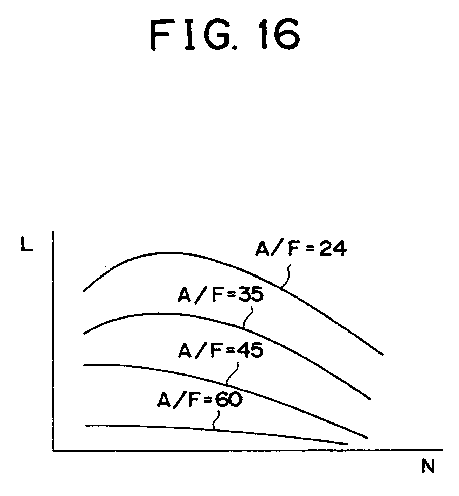

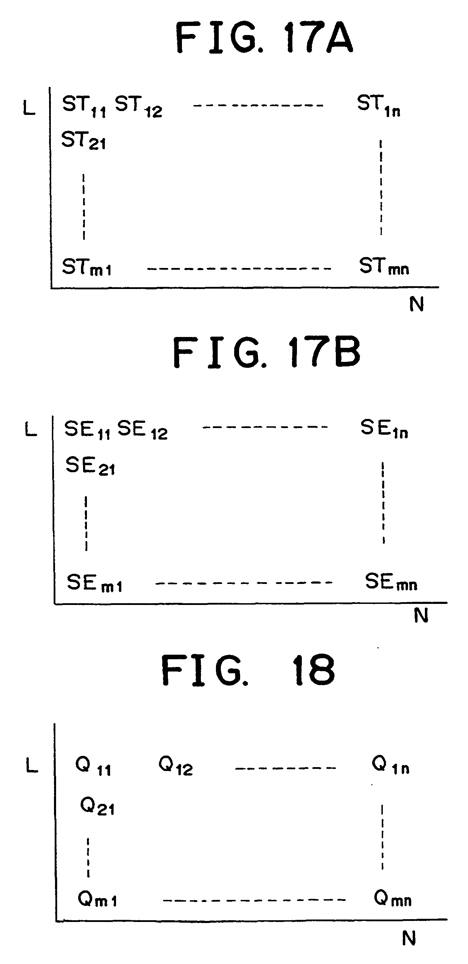

Fig. 16 shows a target air-fuel ratio A/F when the second combustion mode, namely, the conventionally adopted combustion is performed. Referring to Fig. 16, curves indicated by A/F = 24, A/F = 35, A/F = 45 and A/F = 60 represent cases where the air-fuel ratio is 24, 35, 45 and 60 respectively. The target opening degree ST of the throttle valve 20, which is necessary for setting the air-fuel ratio to the target air-fuel ratio A/F shown in Fig. 16, is preliminarily stored in the form of a map in the ROM 42 as a function of load requirement L and engine speed N, as can be seen from Fig. 17A. The target opening degree SE of the EGR control valve 31, which is necessary for setting the air-fuel ratio to the target air-fuel ratio A/F shown in Fig. 16, is preliminarily stored in the form of a map in the ROM 42 as a function of load requirement L and engine speed N, as can be seen from Fig. 17B. Further, when the second combustion mode is present, a fuel injection amount Q is calculated based on load requirement L and engine speed N. The fuel injection amount Q is preliminarily stored in the form of a map in the ROM 42 as a function of load requirement L and engine speed N.

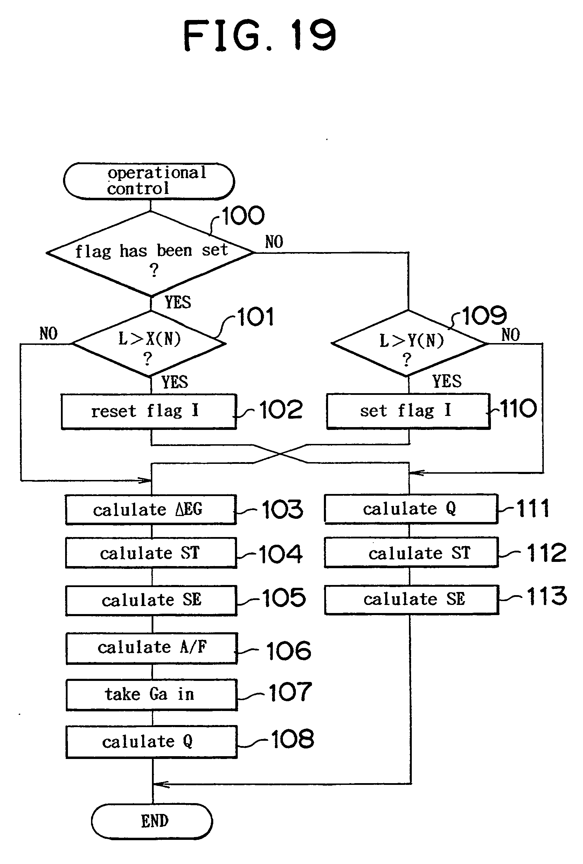

The operational control will now be described with reference to Fig. 19.

Referring to Fig. 19, first of all, it is determined in step 100 whether or not a flag I indicating that the engine is in the first operational area I has been set. If the flag I has been set, that is, if the engine is in the first operational area I, the process proceeds to step 101 where it is determined whether or not the load requirement L has become larger than the first border X1(N). If L≤X1(N), the process proceeds to step 103 where the low-temperature combustion is performed.

That is, in step 103, based on the intake air temperature TG detected by the temperature sensor 61 and the engine coolant temperature TW detected by the coolant temperature sensor 60, an increase amount ΔEG in EGR rate is calculated from the map shown in Fig. 10B. Then in step 104, based on the value of ΔEG, a target opening degree ST of the throttle valve 20 is calculated from a map selected among Figs. 12A, 13A, 14A and 15A. The opening degree of the throttle valve 20 is then set to the thus-calculated target opening degree ST. Then in step 105, based on the value of ΔEG, a target opening degree SE of the EGR control valve 31 is calculated from a map selected among Figs. 12B, 13B, 14B and 15B. The opening degree of the EGR control valve 31 is then set to the thus-calculated target opening degree SE.

Then in step 106, based on the value of ΔEG, a target air-fuel ratio A/F is calculated from a map selected among Figs. 12C, 13C, 14C and 15C. Then in step 107, a mass flow rate Ga of intake air detected by the mass flowmeter 62 is adopted. Then in step 108, a fuel injection amount Q, which is necessary for setting the air-fuel ratio to the target air-fuel ratio A/F, is calculated based on the mass flow rate Ga of intake air and the target air-fuel ratio A/F.

On the other hand, if it is determined in step 101 that L > X(N), the process proceeds to step 102, where the flag I is reset. The process then proceeds to step 111, where combustion is performed according to the second combustion mode. That is, in step 111, a target fuel injection amount Q is calculated from the map shown in Fig. 18, and the fuel injection amount is set to the thus-calculated target fuel injection amount Q. Then in step 112, a target opening degree ST of the throttle valve 20 is calculated from the map shown in Fig. 17A, and the opening degree of the throttle valve 20 is set to the thus-calculated opening degree ST.

Then in step 113, a target opening degree SE of the EGR control valve 31 is calculated from the map shown in Fig. 17B, and the opening degree of the EGR control valve 31 is set to the thus-calculated opening degree SE.

If the flag I has been reset, during the following processing cycle, the process proceeds from step 100 to step 109, where it is determined whether or not the load requirement L has become lower than the second border Y(N). If L≥Y(N), the process proceeds to step 111, where the second combustion mode is performed under a lean air-fuel ratio.

On the other hand, if it is determined in step 109 that L < Y(N), the process proceeds to step 110 where the flag I is set. The process then proceeds to step 103, where the low-temperature combustion is performed.

According to the aforementioned embodiment of the present invention, it is possible to ensure good low-temperature combustion even at the time of changes in temperatures including a temperature of the intake gas supplied to the combustion chamber, a temperature of engine coolant and the like.

A second embodiment of the present invention will now be described.

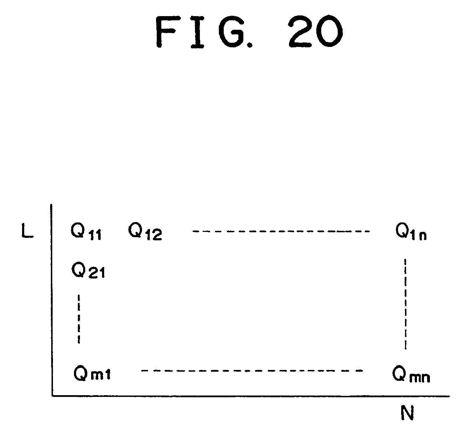

Fig. 20 shows a required injection amount in the first operational area I. As shown in Fig. 20, the required injection amount Q is preliminarily stored in the form of a map in the ROM 42 as a function of depression amount L of the accelerator pedal 50 and engine speed N.

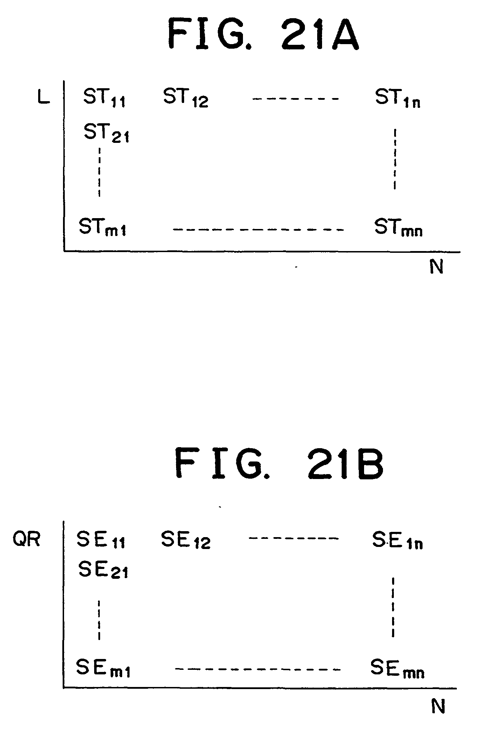

The target opening degree ST of the throttle valve 20, which is necessary for setting the air-fuel ratio to the target air-fuel ratio A/F shown in Fig. 9, is preliminarily stored in the form of a map in the ROM 42 as a function of load requirement L and engine speed N, as can be seen from Fig. 21A.

Further, the target opening degree SE of the EGR control valve 31, which is necessary for setting the air-fuel ratio to the target air-fuel ratio A/F shown in Fig. 9, is preliminarily stored in the form of a map in the ROM 42 as a function of load requirement L and engine speed N, as can be seen from Fig. 21B. During constant operation, an injection amount QR for EGR control coincides with the required injection amount Q. However, during transient operation, the injection amount QR becomes equal to a value determined by a required injection amount Q and an actual injection amount QF, as will be described later. The target opening degree SE of the EGR control valve 31 shown in Fig. 21B becomes larger in proportion to an increase in injection amount QR for EGR control.

In this embodiment, when the second combustion mode, namely, the conventionally adopted combustion is performed, the target air-fuel ratio A/F assumes the same value as in the first embodiment shown in Fig. 16.

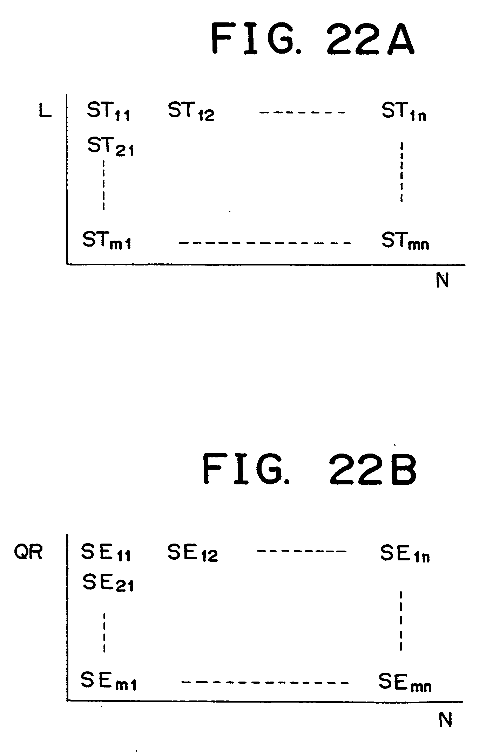

Further, the target opening degree SE of the EGR control valve 31, which is necessary for setting the air-fuel ratio to the target air-fuel ratio A/F shown in Fig. 16, is preliminarily stored in the form of a map in the ROM 42 as a function of injection amount QR for EGR control and engine speed N, as can be seen from Fig. 22B. As described above, during constant operation, the injection amount QR for EGR control coincides with the required injection amount Q. During transient operation, the injection amount QR becomes equal to a value determined by a required injection amount Q and an actual injection amount QF. The target opening degree SE of the EGR control valve 31 shown in Fig. 22B becomes smaller in proportion to an increase in injection amount QR for EGR control.

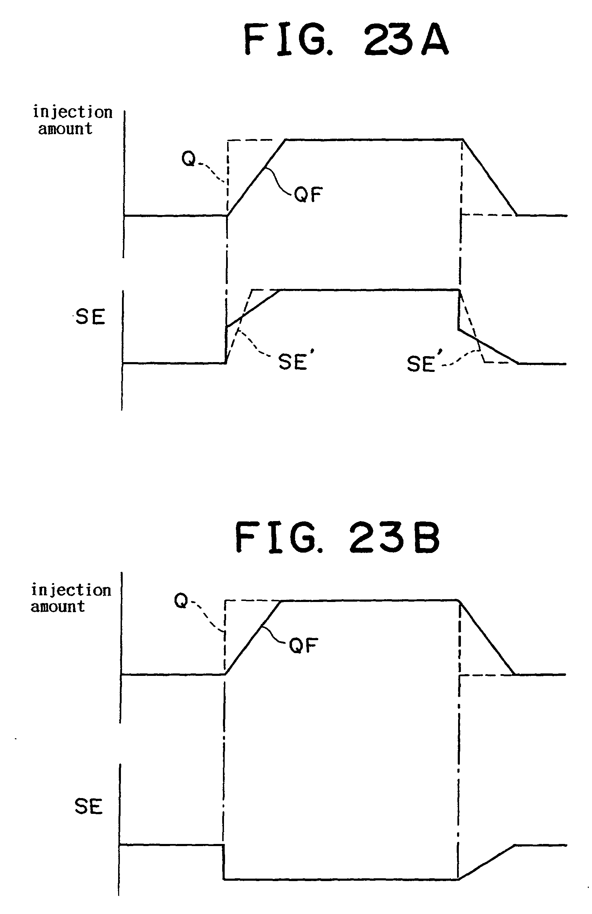

It will now be described with reference to Fig. 23 how to control injection amount and the EGR control valve 31 during transient operation. Fig. 23A shows that the first combustion mode is present, and Fig. 23B shows that the second combustion mode is present. In the respective figures, a broken line Q represents a required injection amount, and a solid line QF represents actual injection amount. It is understood from Figs. 23A and 23B that the actual injection amount QF is increased gradually in response to an abrupt increase in the required injection amount Q and that the actual injection amount QF is reduced gradually in response to an abrupt reduction in the required injection amount Q.

When combustion is performed according to the first combustion mode, that is, when the low-temperature combustion is performed, there is an optimum EGR rate corresponding to the actual injection amount QF. During constant operation, the injection amount QR for EGR control coincides with the actual injection amount QF. Fig. 21B shows a target opening degree SE of the EGR control valve 31 where the EGR rate reaches its optimum value at this time. However, there is a certain delay in opening and closing the EGR control valve 31. Besides, it takes some time for the EGR rate in the combustion chamber 5 to change after a change in opening degree of the EGR control valve 31. Therefore, even if the opening degree of the EGR control valve 31 is adjusted to a value suited for the actual injection amount QF during transient operation, the EGR rate deviates from its optimum value due to a delay of change in EGR rate in the combustion chamber 5.

In this embodiment, as indicated by a solid line in Fig. 23A, the target opening degree SE of the EGR control valve 31 is increased or decreased gradually so as to maintain the EGR rate at its optimum value even during transient operation.

To be more specific, according to this embodiment, the mean value (= (Q + QF)/2) of a required injection amount Q and an actual injection amount QF is adopted as the injection amount QR for EGR control. Based on the injection amount QR for EGR control, the opening degree of the EGR control valve 31 is controlled using the map shown in Fig. 21B. In this case, as shown in Fig. 23A, if the required injection amount Q has increased, the opening degree SE of the EGR control valve 31 is increased gradually from a value larger than the opening degree suited for the actual injection amount QF. If the required injection amount Q has decreased, the opening degree SE of the EGR control valve 31 is reduced gradually from a value smaller than the opening degree suited for the actual injection amount QF.

In response to an increase in the required injection amount Q, if the opening degree SE of the EGR control valve 31 is thus increased gradually from a value larger than the opening degree suited for the actual injection amount QF, the EGR rate in the combustion chamber 5 is continuously maintained at its optimum value. Likewise, in response to a reduction in the required injection amount Q, if the opening degree SE of the EGR control valve 31 is reduced gradually from a value smaller than the opening degree suited for the actual injection amount QF, the EGR rate in the combustion chamber 5 is continuously maintained at its optimum value.

In Fig. 23A, the opening degree SE of the EGR control valve 31 is changed according to one example indicated by a solid line. However, it is also possible to control a target opening degree SE' of the EGR control valve 31, for example, as indicated by a broken line SE', such that upon a change in the required injection amount Q, the opening degree of the EGR control valve 31 is increased or reduced to a value suited for the required injection amount Q before the actual injection amount QF reaches the required injection amount Q.

On the other hand, when combustion is performed according to the second combustion mode, as shown in Fig. 23B, the opening degree SE of the EGR control valve 31 is reduced immediately after an increase in the required injection amount Q. In response to a reduction in injection requirement Q, the opening degree SE of the EGR control valve 31 is increased gradually.

When the second combustion mode is present, if the EGR rate in the combustion chamber 5 is high at the time of an increase in injection amount, smoke is generated. Therefore, in order to reduce an EGR rate in the combustion chamber 5 as soon as possible at the time of an increase in injection amount, the target opening degree SE of the EGR control valve 31 is reduced immediately after an increase in the required injection amount Q. Further, at the time of a reduction in fuel injection amount, the EGR control valve 31 is opened gradually so as to prevent generation of smoke resulting from an excessively high EGR rate.

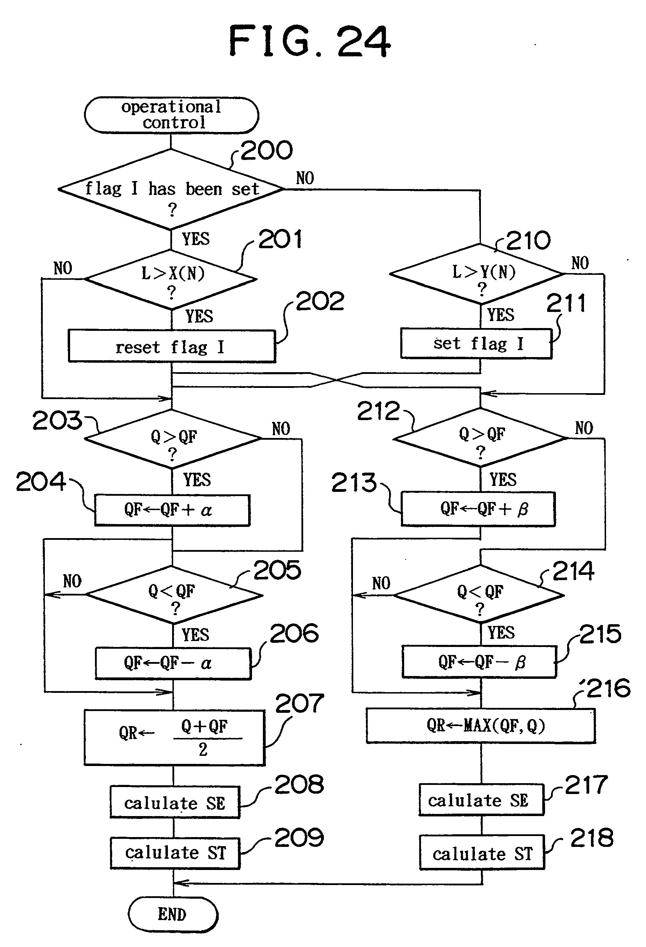

The operational control will now be described with reference to Fig. 24.

Referring to Fig. 24, first of all, it is determined in step 200 whether or not a flag I indicating that the engine is in the first operational area I has been set. If the flag I has been set, that is, if the engine is in the first operational area I, the process proceeds to step 201 where it is determined whether or not the load requirement L has become larger than the first border X1(N). If L ≤ X1(N), the process proceeds to step 203 where combustion is performed according to the first combustion mode.

That is, it is determined in step 203 whether or not the required injection amount Q is larger than the actual injection amount QF. If Q > QF, the process proceeds to step 204, where a constant value α is added to the actual injection amount QF. The process then proceeds to step 207. Accordingly, at this time, the actual injection amount QF is increased gradually. On the other hand, if Q ≤ QF, the process proceeds to step 205, where it is determined whether or not the required injection amount Q is smaller than the actual injection amount QF. If Q < QF, the proceeds to step 206, where the constant value α is subtracted from the actual injection amount QF. The process then proceeds to step 207. Accordingly, at this time, the actual injection amount QF is reduced gradually.

In step 207, the mean value (= (Q + QF)/2) of a required injection amount Q and an actual injection amount QF is adopted as the injection amount QR for EGR control. Then in step 208, based on the injection amount QR for EGR control, a target opening degree SE of the EGR control valve 31 is calculated from the map shown in Fig. 21B. Then in step 209, a target opening degree ST of the throttle valve 20 is calculated from the map shown in Fig. 21A.

On the other hand, if it is determined in step 201 that L > X(N), the process proceeds to step 202, where the flag I is reset. The process then proceeds to step 212, where combustion according to the second combustion mode is performed.

That is, it is determined in step 212 whether or not the required injection amount Q is larger than the actual injection amount Q. If Q > QF, the process proceeds to step 213, where a constant value β is added to the actual injection amount QF. The process then proceeds to step 216. Accordingly, at this time, the actual injection amount QF is increased gradually. On the other hand, if Q ≤ QF, the process proceeds to step 214, where it is determined whether or not the required injection amount Q is smaller than the actual injection amount QF. If Q < QF, the process proceeds to step 215, where the constant value β is subtracted from the actual injection amount QF. The process then proceeds to step 216. Accordingly, at this time, the actual injection amount QF is reduced gradually.

In step 216, the larger one of the actual injection amount QF and the required injection amount Q is adopted as the injection amount QR for EGR control. Then in step 217, based on the injection amount QR for EGR control, a target opening degree SE of the EGR control valve 31 is calculated from the map shown in Fig. 22B. Therefore, if Q > QF, the target opening degree SE of the EGR control valve 31 is reduced immediately as shown in Fig. 23B. If Q < QF, the target opening degree SE of the EGR control valve 31 is increased gradually in proportion to a decrease in actual injection amount QF. Then in step 218, a target opening degree ST of the throttle valve 20 is calculated from the map shown in Fig. 22A.

If the flag I has been reset, during the following processing cycle, the process proceeds from step 200 to step 210, where it is determined whether or not the load requirement L has become lower than the second border Y(N). If L ≥ Y(N), the process proceeds to step 212, where combustion is performed according to the second combustion mode. On the other hand, if it is determined in step 210 that L < Y(N), the process proceeds to step 211, where the flag I is set. The process then proceeds to step 203, where the low-temperature combustion is performed.

In Figs. 21A and 22A, the actual injection amount QF can be used instead of the load requirement L. That is, the target opening degree ST of the throttle valve 20 can be a function of actual injection amount QF and engine speed N. In this case, if the required injection amount Q has increased under the first combustion mode, the opening degree ST of the throttle valve 20 is gradually increased together with the actual injection amount QF. If the required injection amount Q has decreased, the opening degree ST of the throttle valve 20 is gradually reduced together with the actual injection amount QF.

According to this embodiment, it is possible to prevent generation of smoke or occurrence of misfiring during transient operation.
Although in the first embodiment of the invention, the required injection amount Q has not been taken into consideration as a control parameter, it would be possible to provide the controlling of the required injection amount Q within the flow chart corresponding to the first embodiment.
In detail, with respect to Figs. 19 and 24, it would be possible that instead of and/or in addition to step 108, any of the steps 203 to 207 can be carried out. Accordingly, it would also be possible that instead of and/or in addition to step 111, any of the steps 212 to 216 can be carried out.
Alternatively or in addition, although in the second embodiment of the invention the increase amount ΔEG in the EGR rate has not been taken into consideration as a control parameter, it would be possible to provide the calculation of this increase amount ΔEG within the flow chart corresponding to the second embodiment.

In detail, with respect to Figs. 19 and 24, it would be possible that in the branch in Fig. 24 for executing the first combustion mode, the step 103 can be carried out. In addition, it would also be possible to further carry out the steps 106 and 107 within the branch for executing the first combustion mode in the second embodiment.

While the present invention has been described with reference to what are presently considered to be preferred embodiments thereof, it is to be understood that the present invention is not limited to the disclosed embodiments or construction. Good low-temperature combustion is ensured even at the time of a change in temperature of intake gas supplied to a combustion chamber or the like. Either a first combustion mode or a second combustion mode is selected. During the first combustion mode, the amount of recirculated exhaust gas supplied to the combustion chamber (5) is larger than an amount of EGR gas corresponding to a peak generation amount of soot, and soot is hardly generated. During the second combustion mode, the amount of EGR gas in the combustion chamber (5) is smaller than the amount of EGR gas corresponding to the peak generation amount of soot. While combustion is performed according to the first combustion mode, the EGR rate is increased in proportion to a rise in temperature of intake gas supplied to the combustion chamber (5) or engine coolant temperature which temperatures are detected through detecting means (60, 61).

## Claims

1. An internal combustion engine (1) provided with an exhaust gas recirculation system (29) for recirculating exhaust gas into an engine intake passage (17), wherein as an amount of recirculated exhaust gas supplied to the engine intake passage (17) is increased, a generation amount of soot gradually increases and reaches its peak, the amount of recirculated gas supplied to the combustion chamber (5) being controllable to exceed an amount of recirculated exhaust gas corresponding to the peak of the generation amount of soot, wherein a temperature of fuel and ambient gas in the combustion chamber is affected by factors influencing operational conditions,
**characterized in that**
a representative temperature reflecting the influencing factors is detected by a detection means (60, 61) and an exhaust gas recirculation rate is controlled based on the detection amount.

2. An internal combustion engine according to claim 1,
**characterized in that**
an exhaust gas recirculation rate is increased in proportion to an increase in the detected temperature.

3. An internal combustion engine (1) according to claim 1 or 2, **characterized in that** the representative temperature is determined based on at least a temperature of intake gas supplied to the combustion chamber such that the intake gas temperature rises in proportion to a rise of the representative temperature.

4. An internal combustion engine (1) according to claim 1 or 2, **characterized in that** the representative temperature is determined based on at least a temperature of the intake gas supplied to the combustion chamber and a temperature of an engine coolant.

5. An internal combustion engine (1) according to any of claims 1 to 4, **characterized in that**:
a throttle valve (20) is disposed in the engine intake passage (17);
the exhaust gas recirculation system (29) is provided with an exhaust gas recirculation control valve (31) for controlling the amount of recirculated exhaust gas supplied to the intake passage (17) downstream of the throttle valve (20); and
the exhaust gas recirculation rate is increased by increasing an opening degree of the exhaust gas recirculation control valve (31).

6. An internal combustion engine (1) according to claim 5, **characterized in that** if the exhaust gas recirculation control valve (31) is open completely, an opening degree of the throttle valve (20) is reduced for increasing the exhaust gas recirculation rate.

7. An internal combustion engine (1) according to any of claims 1 to 4, **characterized in that**:
the exhaust gas recirculation system (29) is provided with an exhaust gas recirculation control valve (31);
with an increase of the required injection amount Q , an actual injection amount increases gradually and the exhaust gas recirculation control valve (31) opens gradually; and
with a decrease of the required injection amount Q, an actual injection amount QF reduces gradually and the exhaust gas recirculation control valve (31) closes gradually.

8. An internal combustion engine (1) according to claim 7, **characterized in that**:
with an increase of the required injection amount Q , an opening degree SE of the exhaust gas recirculation control valve (31) increases gradually from a value larger than an opening degree suited for an actual injection amount QF; and
with a decrease of the required injection amount Q , an opening degree SE of the exhaust gas recirculation control valve (31) reduces gradually from a value smaller than an opening degree suited for an actual injection amount QF.

9. An internal combustion engine (1) according to claim 7 or 8, **characterized in that**:
a throttle valve (20) is disposed in the engine intake passage (17);
with an increase of the required injection amount Q , an actual injection amount QF increases gradually and the throttle valve (20) opens gradually; and
with a decrease of the required injection amount Q , an actual injection amount QF reduces gradually and the throttle valve (20) closes gradually.

10. An internal combustion engine (1) according to any of claims 1 to 9 , **characterized in that** a catalyst (25), preferably at least one of an oxidation catalyst, a three-way catalyst and an NOx absorber, functioning as an oxidiser is disposed in the engine exhaust passage (17).

11. An internal combustion engine (1) according to any of claims 1 to 10, **characterized in that**:
the internal combustion engine (1) is provided with a switching means (40) for selectively switching a first combustion mode and a second combustion mode;
wherein during the first combustion mode, the combustion chamber (5) contains recirculated exhaust gas of an amount larger than an amount where a generation amount of soot reaches its peak, so that soot is hardly generated, and during the second combustion mode, the combustion chamber (5) contains recirculated exhaust gas of an amount smaller than an amount where a generation amount of soot reaches its peak,
and wherein an operational area of the engine is divided into a first operational area I on a low-load side and a second operational area II on a high-load side;
that in the first operational area I, combustion is performed according to the first combustion mode; and
that in the second operational area II, combustion is performed according to the second combustion mode.

12. An internal combustion engine (1) according to claim 11, as far as this claim refers back to claim 7,
**characterized in that**:
during the first combustion mode, the control is made according to the features of claim 7, whereas with an increase of the required injection amount Q during the second combustion mode, an actual injection amount QF increases gradually and the exhaust gas recirculation control valve (31) closes immediately; and
with a decrease of the required injection amount Q , an actual injection amount QF reduces gradually and the exhaust gas recirculation control valve (31) opens gradually.

## Patentansprüche

1. Verbrennungsmotor (1) versehen mit einem Abgasrezirkulationssystem (29) für ein Rezirkulieren eines Abgases in einen Verbrennungsmotoreinlasskanal (17), wobei, wenn die Menge an zu dem Verbrennungsmotoreinlasskanal (17) gelieferten Rezirkulationsabgas erhöht wird, eine Erzeugungsmenge an Ruß allmählich zunimmt und ihren Spitzenwert erreicht,
wobei die zu der Verbrennungskammer (5) gelieferte Menge an Rezirkulationsgas so steuerbar ist, dass eine Menge an Rezirkulationsgas überschritten wird, die dem Spitzenpunkt der Erzeugungsmenge an Ruß entspricht, wobei eine Temperatur des Kraftstoffs und des Umgebungsgases in der Verbrennungskammer durch Faktoren beeinflusst wird, die die Betriebsbedingungen beeinflussen,
**dadurch gekennzeichnet, dass**
eine repräsentative Temperatur, die die beeinflussenden Faktoren reflektiert, durch eine Erfassungseinrichtung (60, 61) erfasst wird, und eine Abgasrezirkulationsrate auf der Grundlage des Erfassungsbetrages gesteuert wird.

2. Verbrennungsmotor gemäß Anspruch 1,
**dadurch gekennzeichnet, dass**
eine Abgasrezirkulationsrate proportional zu einer Zunahme der erfassten Temperatur erhöht wird.

3. Verbrennungsmotor (1), gemäß Anspruch 1 oder 2,
**dadurch gekennzeichnet, dass**
die repräsentative Temperatur auf der Grundlage von zumindest einer Temperatur eines Einlassgases, das zu der Verbrennungskammer geliefert wird, derart bestimmt wird, dass die Einlassgastemperatur proportional zu einem Anstieg der repräsentativen Temperatur ansteigt.

4. Verbrennungsmotor (1) gemäß Anspruch 1 oder 2,
**dadurch gekennzeichnet, dass**
die repräsentative Temperatur auf der Grundlage von zumindest einer Temperatur des Einlassgases, das zu der Verbrennungskammer geliefert wird, und einer Temperatur eines Verbrennungsmotorkühlmittels bestimmt wird.

5. Verbrennungsmotor (1) gemäß einem der Ansprüche 1 bis 4,
**dadurch gekennzeichnet, dass**
ein Drosselventil (20) in dem Verbrennungsmotoreinlasskanal (17) angeordnet ist;
das Abgasrezirkulationssystem (29) mit einem Abgasrezirkulationssteuerventil (31) versehen ist, um die Menge an Rezirkulationsabgas zu steuern, das stromabwärtig von dem Drosselventil (20) zu dem Einlasskanal (17) geliefert wird; und
die Abgasrezirkulationsrate erhöht wird, indem ein Öffnungsgrad des Abgasrezirkulationssteuerventils (31) erhöht wird.

6. Verbrennungsmotor (1) gemäß Anspruch 5,
**dadurch gekennzeichnet, dass**
wenn das Abgasrezirkulationssteuerventil (31) vollständig geöffnet ist, ein Öffnungsgrad des Drosselventils (20) verringert wird, um die Abgasrezirkulationsrate zu erhöhen.

7. Verbrennungsmotor (1) gemäß einem der Ansprüche 1 bis 4,
**dadurch gekennzeichnet, dass**
das Abgasrezirkulationssystem (29) mit einem Abgasrezirkulationssteuerventil (31) versehen ist;
mit einer Zunahme der erforderlichen Einspritzmenge Q eine derzeitige Einspritzmenge allmählich zunimmt und das Abgasrezirkulationssteuerventil (31) allmählich öffnet; und
mit einer Abnahme der erforderlichen Einspritzmenge Q eine derzeitige Einspritzmenge QF allmählich abnimmt und das Abgasrezirkulationssteuerventil (31) allmählich schließt.

8. Verbrennungsmotor (1) gemäß Anspruch 7,
**dadurch gekennzeichnet, dass**
mit einer Zunahme der erforderlichen Einspritzmenge Q ein Öffnungsgrad SE des Abgasrezirkulationssteuerventils (31) von einem Wert, der größer als ein Öffnungsgrad ist, der für eine derzeitige Einspritzmenge QF geeignet ist, allmählich zunimmt; und
mit einer Abnahme der erforderlichen Einspritzmenge Q ein Öffnungsgrad SE des Abgasrezirkulationssteuerventils (31) allmählich von einem Wert, der geringer als ein Öffnungsgrad ist, der für eine derzeitige Einspritzmenge QF geeignet ist, abnimmt.

9. Verbrennungsmotor (1) gemäß Anspruch 7 oder 8,
**dadurch gekennzeichnet, dass**
ein Drosselventil (20) in dem Verbrennungsmotoreinlasskanal (17) angeordnet ist;
bei einer Zunahme der erforderlichen Einspritzmenge Q eine derzeitige Einspritzmenge QF allmählich zunimmt und das Drosselventil (20) allmählich öffnet; und
bei einer Abnahme der erforderlichen Einspritzmenge Q eine derzeitige Einspritzmenge QF allmählich abnimmt und das Drosselventil (20) allmählich schließt.

10. Verbrennungsmotor (1) gemäß einem der Ansprüche 1 bis 9,
**dadurch gekennzeichnet, dass**
ein Katalysator (25), vorzugsweise zumindest entweder ein Oxidationskatalysator, ein Drei-Wege-Katalysator und / oder ein NOx-Absorbierer, der als eine Oxidationseinrichtung fungiert, in dem Abgaskanal (17) angeordnet ist.

11. Verbrennungsmotor (1) gemäß einem der Ansprüche 1 bis 10,
**dadurch gekennzeichnet, dass**
der Verbrennungsmotor (1) mit einer Schalteinrichtung (40) versehen ist, die wahlweise zwischen einem ersten Verbrennungsmodus und einem zweiten Verbrennungsmodus schaltet;
wobei während des ersten Verbrennungsmodus die Verbrennungskammer (5) Rezirkulationsabgas in einer Menge enthält, die größer als eine Menge ist, bei der eine Erzeugungsmenge an Ruß ihren Spitzenwert erreicht, so dass Ruß kaum erzeugt wird, und während des zweiten Verbrennungsmodus die Verbrennungskammer (5) Rezirkulationsabgas in einer Menge enthält, die geringer als eine Menge ist, bei der eine Erzeugungsmenge an Ruß ihren Spitzenwert erreicht, und
wobei ein Betriebsbereich des Verbrennungsmotors in einen ersten Betriebsbereich I an einer Niedriglastseite und einen zweiten Betriebsbereich II an einer Hochlastseite geteilt ist;
dass in dem ersten Betriebsbereich I eine Verbrennung gemäß dem ersten Verbrennungsmodus ausgeführt wird; und
dass in dem zweiten Betriebsbereich II eine Verbrennung gemäß dem zweiten Verbrennungsmodus ausgeführt wird.

12. Verbrennungsmotor (1) gemäß Anspruch 11, soweit sich dieser Anspruch auf Anspruch 7 rückbezieht,
**dadurch gekennzeichnet, dass** während des ersten Verbrennungsmodus die Steuerung gemäß den Merkmalen von Anspruch 7 ausgeführt wird, wohingegen bei einer Zunahme der erforderlichen Einspritzmenge Q während des zweiten Verbrennungsmodus eine derzeitige Einspritzmenge QF allmählich zunimmt und das Abgasrezirkulationssteuerventil (31) sofort schließt; und
mit einer Abnahme der erforderlichen Einspritzmenge Q eine derzeitige Einspritzmenge QF allmählich abnimmt und das Abgasrezirkulationssteuerventil (31) allmählich öffnet.

## Revendications

1. Moteur à combustion interne (1) pourvu d'un système de recyclage des gaz d'échappement (29) destiné à renvoyer des gaz d'échappement dans un passage d'admission de moteur (17), dans lequel, lorsqu'une quantité de gaz d'échappement recyclés délivrée au passage d'admission de moteur (17) est accrue, une quantité de génération de suie augmente progressivement et atteint son pic, la quantité de gaz recyclé délivrée à la chambre de combustion (5) pouvant être commandée afin de dépasser une quantité de gaz d'échappement recyclés correspondant au pic de la quantité de génération de suie, une température de carburant et de gaz ambiant dans la chambre de combustion étant affectée par des facteurs influençant des conditions de fonctionnement,
**caractérisé en ce que**
une température représentative reflétant les facteurs d'influence est détectée par des moyens de détection (60, 61) et un taux de recyclage de gaz d'échappement est commandé sur la base de la quantité de détection.

2. Moteur à combustion interne selon la revendication 1, **caractérisé en ce que**
un taux de recyclage de gaz d'échappement est augmenté en proportion d'une augmentation de la température détectée.

3. Moteur à combustion interne (1) selon la revendication 1 ou 2, **caractérisé en ce que** la température représentative est déterminée sur la base d'au moins une température de gaz d'admission délivrés à la chambre de combustion de telle sorte que la température de gaz d'admission augmente en proportion d'une augmentation de la température représentative.

4. Moteur à combustion interne (1) selon la revendication 1 ou 2, **caractérisé en ce que** la température représentative est déterminée sur la base d'au moins une température des gaz d'admission délivrés à la chambre de combustion et d'une température d'un agent de refroidissement de moteur.

5. Moteur à combustion interne (1) selon l'une quelconque des revendications 1 à 4, **caractérisé en ce que** :
un papillon des gaz (20) est disposé dans le passage d'admission de moteur (17) ;
le système de recyclage des gaz d'échappement (29) est pourvu d'une soupape de commande de recyclage des gaz d'échappement (31) destinée à commander la quantité de gaz d'échappement recyclés délivrée au passage d'admission (17) en aval du papillon des gaz (20) ; et
le taux de recyclage de gaz d'échappement est augmenté en augmentant un degré d'ouverture de la soupape de commande de recyclage des gaz d'échappement (31).

6. Moteur à combustion interne (1) selon la revendication 5, **caractérisé en ce que**, si la soupape de commande de recyclage des gaz d'échappement (31) est complètement ouverte, un degré d'ouverture du papillon des gaz (20) est réduit afin d'augmenter le taux de recyclage de gaz d'échappement.

7. Moteur à combustion interne (1) selon l'une quelconque des revendications 1 à 4, **caractérisé en ce que** :
le système de recyclage des gaz d'échappement (29) est pourvu d'une soupape de commande de recyclage des gaz d'échappement (31) ;
avec une augmentation de la quantité d'injection exigée Q, une quantité d'injection réelle augmente progressivement et
la soupape de commande de recyclage des gaz d'échappement (31) s'ouvre progressivement ; et
avec une diminution de la quantité d'injection exigée Q, une quantité d'injection réelle QF diminue progressivement et la soupape de commande de recyclage des gaz d'échappement (31) se ferme progressivement.

8. Moteur à combustion interne (1) selon la revendication 7, **caractérisé en ce que** :
avec une augmentation de la quantité d'injection exigée Q, un degré d'ouverture SE de la soupape de commande de recyclage des gaz d'échappement (31) augmente progressivement à partir d'une valeur plus grande qu'un degré d'ouverture approprié pour une quantité d'injection réelle QF ; et
avec une diminution de la quantité d'injection exigée Q, un degré d'ouverture SE de la soupape de commande de recyclage des gaz d'échappement (31) diminue progressivement à partir d'une valeur plus petite qu'un degré d'ouverture approprié pour une quantité d'injection réelle QF.

9. Moteur à combustion interne (1) selon la revendication 7 ou 8, **caractérisé en ce que** :
un papillon des gaz (20) est disposé dans le passage d'admission de moteur (17) ;
avec une augmentation de la quantité d'injection exigée Q, une quantité d'injection réelle QF augmente progressivement et le papillon des gaz (20) s'ouvre progressivement ; et
avec une diminution de la quantité d'injection exigée Q, une quantité d'injection réelle QF diminue progressivement et le papillon des gaz (20) se ferme progressivement.

10. Moteur à combustion interne (1) selon l'une quelconque des revendications 1 à 9, **caractérisé en ce qu'**un catalyseur (25), de préférence au moins un catalyseur d'oxydation, un catalyseur à trois voies ou un absorbeur de NOx, fonctionnant comme un oxydant, est disposé dans le passage d'admission de moteur (17).

11. Moteur à combustion interne (1) selon l'une quelconque des revendications 1 à 10, **caractérisé en ce que** :
le moteur à combustion interne (1) est pourvu de moyens de commutation (40) destinés à basculer de manière sélective entre un premier mode de combustion et un deuxième mode de combustion ;
pendant le premier mode de combustion, la chambre de combustion (5) contient des gaz d'échappement recyclés dans une quantité plus grande qu'une quantité où une quantité de génération de suie atteint son pic, de telle sorte que de la suie est difficilement générée, et pendant le deuxième mode de combustion, la chambre de combustion (5) contient des gaz d'échappement recyclés dans une quantité plus faible qu'une quantité où une quantité de génération de suie atteint son pic,
et une zone de fonctionnement du moteur est divisée en une première zone de fonctionnement I sur un côté à faible charge et une deuxième zone de fonctionnement II sur un côté à forte charge ;
**en ce que**, dans la première zone de fonctionnement I, une combustion est réalisée selon le premier mode de combustion ; et
**en ce que**, dans la deuxième zone de fonctionnement II, une combustion est réalisée selon le deuxième mode de combustion.

12. Moteur à combustion interne (1) selon la revendication 11, lorsque cette revendication est rattachée à la revendication 7, **caractérisé en ce que** :
pendant le premier mode de combustion, la commande est réalisée selon les caractéristiques de la revendication 7, alors que, avec une augmentation de la quantité d'injection exigée Q pendant le deuxième mode de combustion, une quantité d'injection réelle QF augmente progressivement et
la soupape de commande de recyclage des gaz d'échappement (31) se ferme immédiatement ; et
avec une diminution de la quantité d'injection exigée Q, une quantité d'injection réelle QF diminue progressivement et la soupape de commande de recyclage des gaz d'échappement (31) s'ouvre progressivement.
